(19) **Europäisches Patentamt / European Patent Office / Office européen des brevets**

(11)  **EP 3 616 452 B1**

(12)  # EUROPEAN PATENT SPECIFICATION

(45) Date of publication and mention
of the grant of the patent:
**24.09.2025   Bulletin 2025/39**

(21) Application number: **18791849.5**

(22) Date of filing: **24.04.2018**

(51) International Patent Classification (IPC):
**H04L 5/00** *(2006.01)*        **H04W 72/23** *(2023.01)*

(52) Cooperative Patent Classification (CPC):
**H04L 5/0053; H04L 5/0044; H04L 5/0094;
H04W 72/23; H04L 5/0007**

(86) International application number:
**PCT/US2018/029071**

(87) International publication number:
**WO 2018/200472 (01.11.2018 Gazette 2018/44)**

(54) **PHYSICAL DOWNLINK CONTROL CHANNELS (PDCCH) AND ENHANCED PDDCHS (EPDCCH) IN WIDEBAND COVERAGE ENHANCEMENT (WCE) ARRANGEMENTS**

PHYSIKALISCHE ABWÄRTSSTRECKENSTEUERUNGSKANÄLE (PDCCH) UND VERBESSERTE PDDCH (EPDCCH) IN ANORDNUNGEN ZUR BREITBANDABDECKUNGSVERBESSERUNG (WCE)

CANAUX DE COMMANDE DE LIAISON DESCENDANTE PHYSIQUE (PDCCH) ET PDCCH AMÉLIORÉS (EPDCCH) DANS DES AGENCEMENTS D'AMÉLIORATION DE COUVERTURE À LARGE BANDE (WCE)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2017   US 201762489079 P
15.05.2017   PCT/CN2017/084381**

(43) Date of publication of application:
**04.03.2020   Bulletin 2020/10**

(73) Proprietor: **Apple Inc.
Cupertino, CA 95014 (US)**

(72) Inventors:
• **NIU, Huaning**
  **Milpitas, California 95035 (US)**
• **CHANG, Wenting**
  **Beijing 100190 (CN)**
• **YE, Qiaoyang**
  **San Jose, California 95134 (US)**
• **LEE, Anthony**
  **San Diego, California 92128 (US)**
• **LIM, Seau S.**
  **Swindon**
  **SWD SN1 4GU (GB)**
• **TALARICO, Salvatore**
  **Sunnyvale, California 94089 (US)**

(74) Representative: **Lang, Johannes et al
Bardehle Pagenberg Partnerschaft mbB
Patentanwälte, Rechtsanwälte
Prinzregentenplatz 7
81675 München (DE)**

(56) References cited:
WO-A1-2014/172528        WO-A1-2016/122756
WO-A1-2016/159680        KR-A- 20160 058 804
US-A1- 2014 050 192       US-A1- 2015 304 995
US-A1- 2016 192 333       US-B2- 9 544 887

• CATT: "Evaluation of PUSCH coverage enhancement techniques", R1-150092, 3GPP TSG RAN WG1 MEETING #80, 18 February 2015 (2015-02-18), Athens, Greece, XP050933306
• SONY: "Performance of NC-PDCCH and ePDCCH for MTC in Coverage Enhancement Mode", R1-150636, 3GPP TSG RAN WG1 MEETING #80, 18 February 2015 (2015-02-18), Athens, Greece, XP050949109, Retrieved from the Internet <URL:http://www.3gpp.org/ftp/tsg_ran/WG1_RL1/TSGR1_80/Docs/>

## Description

PRIORITY CLAIM

This application claims the benefit of priority to United States Provisional Patent Application Serial No. 62/489,079, filed April 24, 2017, and to International Application No. PCT/CN2017/084381, filed May 15, 2017.

TECHNICAL FIELD

Embodiments pertain to wireless communications. Some embodiments relate to wireless networks including 3GPP (Third Generation Partnership Project) networks, 3GPP LTE (Long Term Evolution) networks, and 3GPP LTE-A (LTE Advanced) networks. Some embodiments relate to Fifth Generation (5G) networks. Some embodiments relate to New Radio (NR) networks. Some embodiments relate to wideband coverage enhancement (WCE) arrangements. Some embodiments relate to MulteFire arrangements.

BACKGROUND

In some scenarios, a base station may communicate with mobile devices located in a footprint of a cell. Various techniques may be used to extend the footprint of the cell, to increase a potential range between the mobile devices and the base station and/or to enable communication between the base station and a device located inside of a building. In some embodiments, a wideband coverage enhancement (WCE) technique may be used. In an example scenario, the base station may communicate with a first mobile devices in accordance with the WCE technique and may not necessarily use the WCE technique to communicate with a second mobile devices. In these and other scenarios, there is a general need to enable communication in accordance with WCE techniques.

Document WO 2016/122756 A1 (INTEL IP CORP [US]) 4 August 2016, proposes a method for coverage enhancement, where a UE receives both a physical downlink control channel (PDCCH) and an enhanced PDCCH (E-PDCCH) according to a unified downlink control information (DCI) format, and determines whether a physical downlink shared channel (PDSCH) is scheduled in a fractional sub-frame or a full sub-frame of an unlicensed spectrum. Document US 2016/192333 A1 (WANG FENG [CN] ET AL) 30 June 2016, also deals with coverage enhancement. A base station acquires coverage enhancement rating of a UE and determining a PDCCH configuration information accordingly. PDSCH configuration information (i.e., starting frame and number of repetitions) is determined on the basis of such coverage enhancement. DCI configuration parameter is modified to add the PDCCH and PDSCH configuration information. Document US 2014/050192 A1 (KIM HAKSEONG [KR] ET AL) 20 February 2014, focuses on the multiplexing of PDCCH and E-PDCCH.

SUMMARY

The scope of the invention is defined by the appended independent claims. Further embodiments are defined in their respective dependent claims.

BRIEF DESCRIPTION OF THE DRAWINGS

FIG. 1A is a functional diagram of an example network;
FIG. 1B is a functional diagram of another example network;
FIG. 2 illustrates a block diagram of an example machine;
FIG. 3 illustrates a user device;
FIG. 4 illustrates a base station in accordance with some aspects;
FIG. 5 illustrates an exemplary communication circuitry;
FIG. 6 illustrates an example of a radio frame structure;
FIG. 7A and FIG. 7B illustrate example frequency resources;
FIG. 8 illustrates the operation of a method of communication in accordance with some embodiments;
FIG. 9 illustrates the operation of another method of communication in accordance with some embodiments;
FIG. 10 illustrates examples of transmission of enhanced physical downlink control channels (ePDCCHs) and physical downlink shared channels (PDSCHs) in accordance with some embodiments;
FIG. 11 illustrates additional examples of transmission of ePDCCHs and PDSCHs in accordance with some embodiments;

FIG. 12 illustrates additional examples of transmission of ePDCCHs and PDSCHs in accordance with some embodiments;

FIG. 13 illustrates an example paging procedure in accordance with some embodiments; and

FIG. 14 illustrates examples of transmission of ePDCCHs, enhanced PDSCHs (ePDSCHs), PDCCHs and PDSCHs in accordance with some embodiments.

DETAILED DESCRIPTION

The following description and the drawings sufficiently illustrate specific embodiments to enable those skilled in the art to practice them.

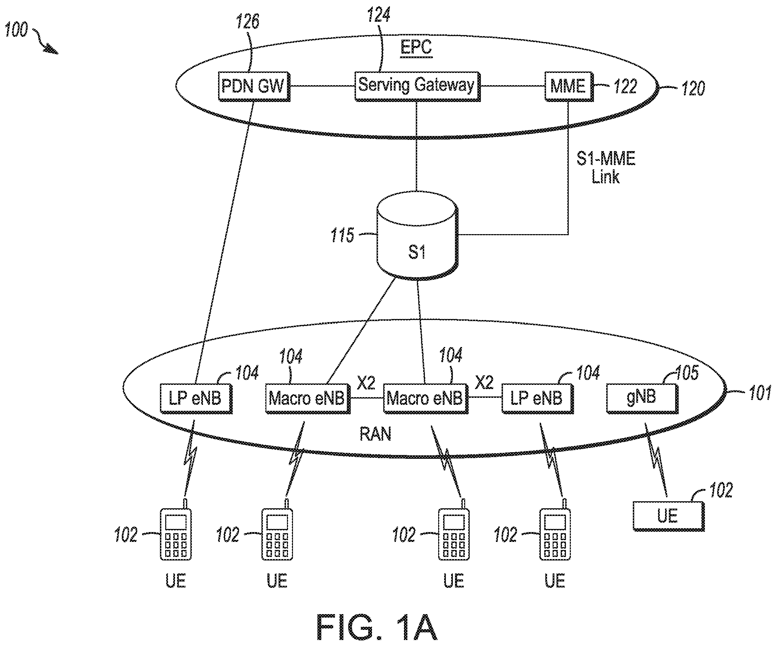

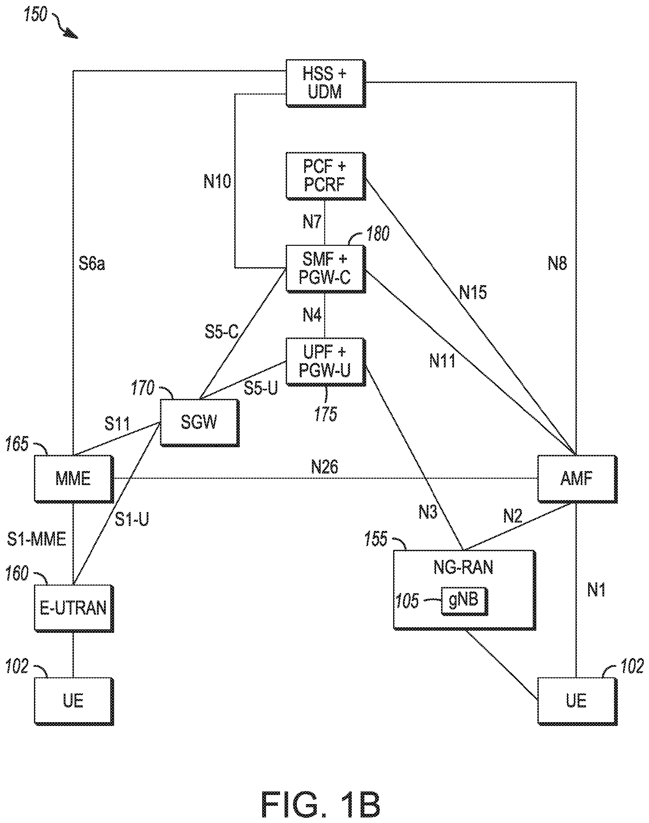

FIG. 1A is a functional diagram of an example network in accordance with some embodiments. FIG. 1B is a functional diagram of another example network in accordance with some embodiments. In references herein, "FIG. 1" may include FIG. 1A and FIG. 1B. In some embodiments, the network 100 may be a Third Generation Partnership Project (3GPP) network. In some embodiments, the network 150 may be a 3GPP network. In a non-limiting example, the network 150 may be a new radio (NR) network. It should be noted that embodiments are not limited to usage of 3GPP networks, however, as other networks may be used in some embodiments. As an example, a Fifth Generation (5G) network may be used in some cases. As another example, a New Radio (NR) network may be used in some cases. As another example, an LTE (E-UTRAN) network may be used in some cases. As another example, a wireless local area network (WLAN) may be used in some cases. Embodiments are not limited to these example networks, however, as other networks may be used in some embodiments. In some embodiments, a network may include one or more components shown in FIG. 1A. Some embodiments may not necessarily include all components shown in FIG. 1A, and some embodiments may include additional components not shown in FIG. 1A. In some embodiments, a network may include one or more components shown in FIG. 1B. Some embodiments may not necessarily include all components shown in FIG. 1B, and some embodiments may include additional components not shown in FIG. 1B. In some embodiments, a network may include one or more components shown in FIG. 1A and one or more components shown in FIG. 1B. In some embodiments, a network may include one or more components shown in FIG. 1A, one or more components shown in FIG. 1B and one or more additional components.

The network 100 may comprise a radio access network (RAN) 101 and the core network 120 (e.g., shown as an evolved packet core (EPC)) coupled together through an S1 interface 115. For convenience and brevity sake, only a portion of the core network 120, as well as the RAN 101, is shown. In a non-limiting example, the RAN 101 may be an evolved universal terrestrial radio access network (E-UTRAN). In another non-limiting example, the RAN 101 may include one or more components of a New Radio (NR) network. In another non-limiting example, the RAN 101 may include one or more components of an E-UTRAN and one or more components of another network (including but not limited to an NR network).

The core network 120 may include a mobility management entity (MME) 122, a serving gateway (serving GW) 124, and packet data network gateway (PDN GW) 126. In some embodiments, the network 100 may include (and/or support) one or more Evolved Node-B's (eNBs) 104 (which may operate as base stations) for communicating with User Equipment (UE) 102. The eNBs 104 may include macro eNBs and low power (LP) eNBs, in some embodiments.

In some embodiments, the network 100 may include (and/or support) one or more Generation Node-B's (gNBs) 105. In some embodiments, one or more eNBs 104 may be configured to operate as gNBs 105. Embodiments are not limited to the number of eNBs 104 shown in FIG. 1A or to the number of gNBs 105 shown in FIG. 1A. In some embodiments, the network 100 may not necessarily include eNBs 104. Embodiments are also not limited to the connectivity of components shown in FIG. 1A.

It should be noted that references herein to an eNB 104 or to a gNB 105 are not limiting. In some embodiments, one or more operations, methods and/or techniques (such as those described herein) may be practiced by a base station component (and/or other component), including but not limited to a gNB 105, an eNB 104, a serving cell, a transmit receive point (TRP) and/or other. In some embodiments, the base station component may be configured to operate in accordance with a New Radio (NR) protocol and/or NR standard, although the scope of embodiments is not limited in this respect. In some embodiments, the base station component may be configured to operate in accordance with a Fifth Generation (5G) protocol and/or 5G standard, although the scope of embodiments is not limited in this respect.

In some embodiments, one or more of the UEs 102, eNBs 104 and/or gNBs 105 may be configured to operate in accordance with an NR protocol and/or NR techniques. References to a UE 102, eNB 104 and/or gNB 105 as part of descriptions herein are not limiting. For instance, descriptions of one or more operations, techniques and/or methods practiced by a gNB 105 are not limiting. In some embodiments, one or more of those operations, techniques and/or methods may be practiced by an eNB 104 and/or other base station component.

In some embodiments, the UE 102 may transmit signals (data, control and/or other) to the gNB 105, and may receive signals (data, control and/or other) from the gNB 105. In some embodiments, the UE 102 may transmit signals (data, control and/or other) to the eNB 104, and may receive signals (data, control and/or other) from the eNB 104. These embodiments will be described in more detail below.

The MME 122 is similar in function to the control plane of legacy Serving GPRS Support Nodes (SGSN). The MME 122 manages mobility aspects in access such as gateway selection and tracking area list management. The serving GW 124 terminates the interface toward the RAN 101, and routes data packets between the RAN 101 and the core network 120. In addition, it may be a local mobility anchor point for inter-gNB handovers and/or inter-eNB handovers and also may provide an anchor for inter-3GPP mobility. Other responsibilities may include lawful intercept, charging, and some policy enforcement. The serving GW 124 and the MME 122 may be implemented in one physical node or separate physical nodes. The PDN GW 126 terminates an SGi interface toward the packet data network (PDN). The PDN GW 126 routes data packets between the EPC 120 and the external PDN, and may be a key node for policy enforcement and charging data collection. It may also provide an anchor point for mobility with non-LTE accesses. The external PDN can be any kind of IP network, as well as an IP Multimedia Subsystem (IMS) domain. The PDN GW 126 and the serving GW 124 may be implemented in one physical node or separated physical nodes.

In some embodiments, the eNBs 104 and/or gNBs 105 (macro and micro) terminate the air interface protocol and may be the first point of contact for a UE 102. In some embodiments, an eNB 104 and/or gNB 105 may fulfill various logical functions for the network 100, including but not limited to RNC (radio network controller functions) such as radio bearer management, uplink and downlink dynamic radio resource management and data packet scheduling, and mobility management.

In some embodiments, UEs 102 may be configured to communicate Orthogonal Frequency Division Multiplexing (OFDM) communication signals with an eNB 104 and/or gNB 105 over a multicarrier communication channel in accordance with an Orthogonal Frequency Division Multiple Access (OFDMA) communication technique. In some embodiments, eNBs 104 and/or gNBs 105 may be configured to communicate OFDM communication signals with a UE 102 over a multicarrier communication channel in accordance with an OFDMA communication technique. The OFDM signals may comprise a plurality of orthogonal subcarriers.

The S1 interface 115 is the interface that separates the RAN 101 and the EPC 120. It may be split into two parts: the S1-U, which carries traffic data between the eNBs 104 and the serving GW 124, and the S1-MME, which is a signaling interface between the eNBs 104 and the MME 122. The X2 interface is the interface between eNBs 104. The X2 interface comprises two parts, the X2-C and X2-U. The X2-C is the control plane interface between the eNBs 104, while the X2-U is the user plane interface between the eNBs 104.

In some embodiments, similar functionality and/or connectivity described for the eNB 104 may be used for the gNB 105, although the scope of embodiments is not limited in this respect. In a non-limiting example, the S1 interface 115 (and/or similar interface) may be split into two parts: the S1-U, which carries traffic data between the gNBs 105 and the serving GW 124, and the S1-MME, which is a signaling interface between the gNBs 104 and the MME 122. The X2 interface (and/or similar interface) may enable communication between eNBs 104, communication between gNBs 105 and/or communication between an eNB 104 and a gNB 105.

With cellular networks, LP cells are typically used to extend coverage to indoor areas where outdoor signals do not reach well, or to add network capacity in areas with very dense phone usage, such as train stations. As used herein, the term low power (LP) eNB refers to any suitable relatively low power eNB for implementing a narrower cell (narrower than a macro cell) such as a femtocell, a picocell, or a micro cell. Femtocell eNBs are typically provided by a mobile network operator to its residential or enterprise customers. A femtocell is typically the size of a residential gateway or smaller and generally connects to the user's broadband line. Once plugged in, the femtocell connects to the mobile operator's mobile network and provides extra coverage in a range of typically 30 to 50 meters for residential femtocells. Thus, a LP eNB might be a femtocell eNB since it is coupled through the PDN GW 126. Similarly, a picocell is a wireless communication system typically covering a small area, such as in-building (offices, shopping malls, train stations, etc.), or more recently in-aircraft. A picocell eNB can generally connect through the X2 link to another eNB such as a macro eNB through its base station controller (BSC) functionality. Thus, LP eNB may be implemented with a picocell eNB since it is coupled to a macro eNB via an X2 interface. Picocell eNBs or other LP eNBs may incorporate some or all functionality of a macro eNB. In some cases, this may be referred to as an access point base station or enterprise femtocell. In some embodiments, various types of gNBs 105 may be used, including but not limited to one or more of the eNB types described above.

In some embodiments, the network 150 may include one or more components configured to operate in accordance with one or more 3GPP standards, including but not limited to an NR standard. The network 150 shown in FIG. 1B may include a next generation RAN (NG-RAN) 155, which may include one or more gNBs 105. In some embodiments, the network 150 may include the E-UTRAN 160, which may include one or more eNBs. The E-UTRAN 160 may be similar to the RAN 101 described herein, although the scope of embodiments is not limited in this respect.

In some embodiments, the network 150 may include the MME 165. The MME 165 may be similar to the MME 122 described herein, although the scope of embodiments is not limited in this respect. The MME 165 may perform one or more operations or functionality similar to those described herein regarding the MME 122, although the scope of embodiments is not limited in this respect.

In some embodiments, the network 150 may include the SGW 170. The SGW 170 may be similar to the SGW 124 described herein, although the scope of embodiments is not limited in this respect. The SGW 170 may perform one or more operations or functionality similar to those described herein regarding the SGW 124, although the scope of embodiments is not limited in this respect.

In some embodiments, the network 150 may include component(s) and/or module(s) for functionality for a user plane function (UPF) and user plane functionality for PGW (PGW-U), as indicated by 175. In some embodiments, the network 150 may include component(s) and/or module(s) for functionality for a session management function (SMF) and control plane functionality for PGW (PGW-C), as indicated by 180. In some embodiments, the component(s) and/or module(s) indicated by 175 and/or 180 may be similar to the PGW 126 described herein, although the scope of embodiments is not limited in this respect. The the component(s) and/or module(s) indicated by 175 and/or 180 may perform one or more operations or functionality similar to those described herein regarding the PGW 126, although the scope of embodiments is not limited in this respect. One or both of the components 170, 172 may perform at least a portion of the functionality described herein for the PGW 126, although the scope of embodiments is not limited in this respect.

Embodiments are not limited to the number or type of components shown in FIG. 1B. Embodiments are also not limited to the connectivity of components shown in FIG. 1B.

In some embodiments, a downlink resource grid may be used for downlink transmissions from an eNB 104 to a UE 102, while uplink transmission from the UE 102 to the eNB 104 may utilize similar techniques. In some embodiments, a downlink resource grid may be used for downlink transmissions from a gNB 105 to a UE 102, while uplink transmission from the UE 102 to the gNB 105 may utilize similar techniques. The grid may be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid correspond to one OFDM symbol and one OFDM subcarrier, respectively. The duration of the resource grid in the time domain corresponds to one slot in a radio frame. The smallest time-frequency unit in a resource grid is denoted as a resource element (RE). There are several different physical downlink channels that are conveyed using such resource blocks. With particular relevance to this disclosure, two of these physical downlink channels are the physical downlink shared channel and the physical down link control channel.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware. Embodiments described herein may be implemented into a system using any suitably configured hardware and/or software.

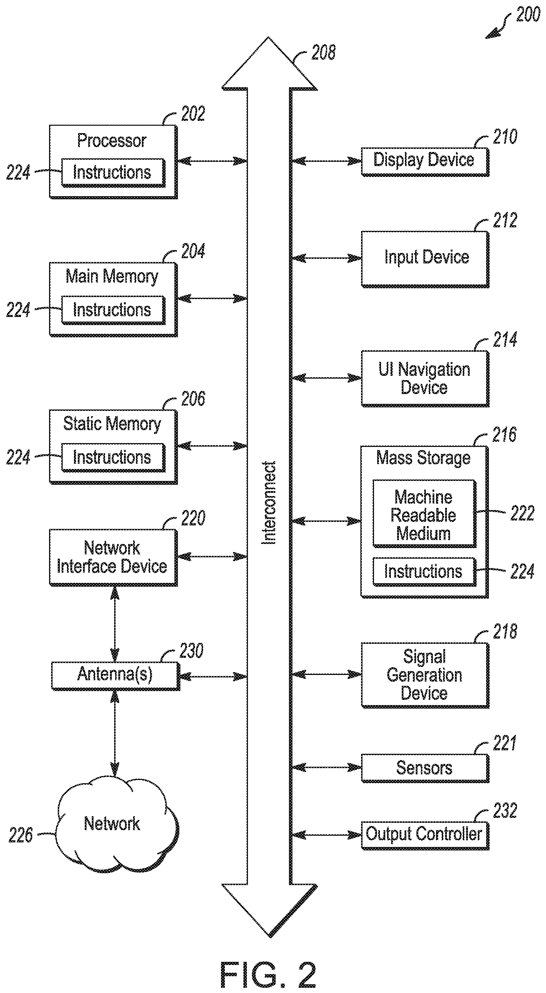

FIG. 2 illustrates a block diagram of an example machine in accordance with some embodiments. The machine 200 is an example machine upon which any one or more of the techniques and/or methodologies discussed herein may be performed. In alternative embodiments, the machine 200 may operate as a standalone device or may be connected (e.g., networked) to other machines. In a networked deployment, the machine 200 may operate in the capacity of a server machine, a client machine, or both in server-client network environments. In an example, the machine 200 may act as a peer machine in peer-to-peer (P2P) (or other distributed) network environment. The machine 200 may be a UE 102. eNB 104, gNB 105, access point (AP), station (STA), user, device, mobile device, base station, personal computer (PC), a tablet PC, a set-top box (STB), a personal digital assistant (PDA), a mobile telephone, a smart phone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

The machine (e.g., computer system) 200 may include a hardware processor 202 (e.g., a central processing unit (CPU), a graphics processing unit (GPU), a hardware processor core, or any combination thereof), a main memory 204 and a static memory 206, some or all of which may communicate with each other via an interlink (e.g., bus) 208. The machine 200 may further include a display unit 210, an alphanumeric input device 212 (e.g., a keyboard), and a user interface (UI) navigation device 214 (e.g., a mouse). In an example, the display unit 210, input device 212 and UI navigation device 214 may be a touch screen display. The machine 200 may additionally include a storage device (e.g., drive unit) 216, a signal generation device 218 (e.g., a speaker), a network interface device 220, and one or more sensors 221, such as a global positioning system (GPS) sensor, compass, accelerometer, or other sensor. The machine 200 may include an output controller 228, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 216 may include a machine readable medium 222 on which is stored one or more sets of data structures or instructions 224 (e.g., software) embodying or utilized by any one or more of the techniques or functions described herein. The instructions 224 may also reside, completely or at least partially, within the main memory 204, within static memory 206, or within the hardware processor 202 during execution thereof by the machine 200. In an example, one or any combination of the hardware processor 202, the main memory 204, the static memory 206, or the storage device 216 may constitute machine readable media. In some embodiments, the machine readable medium may be or may include a non-transitory computer-readable storage medium. In some embodiments, the machine readable medium may be or may include a computer-readable storage medium.

While the machine readable medium 222 is illustrated as a single medium, the term "machine readable medium" may include a single medium or multiple media (e.g., a centralized or distributed database, and/or associated caches and servers) configured to store the one or more instructions 224. The term "machine readable medium" may include any medium that is capable of storing, encoding, or carrying instructions for execution by the machine 200 and that cause the machine 200 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine readable media may include non-transitory machine readable media. In some examples, machine readable media may include machine readable media that is not a transitory propagating signal.

The instructions 224 may further be transmitted or received over a communications network 226 using a transmission medium via the network interface device 220 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 220 may include one or more physical jacks (e.g., Ethernet, coaxial, or phone jacks) or one or more antennas to connect to the communications network 226. In an example, the network interface device 220 may include a plurality of antennas to wirelessly communicate using at least one of single-input multiple-output (SIMO), multiple-input multiple-output (MIMO), or multiple-input single-output (MISO) techniques. In some examples, the network interface device 220 may wirelessly communicate using Multiple User MIMO techniques. The term "transmission medium" shall be taken to include any intangible medium that is capable of storing, encoding or carrying instructions for execution by the machine 200, and includes digital or analog communications signals or other intangible medium to facilitate communication of such software.

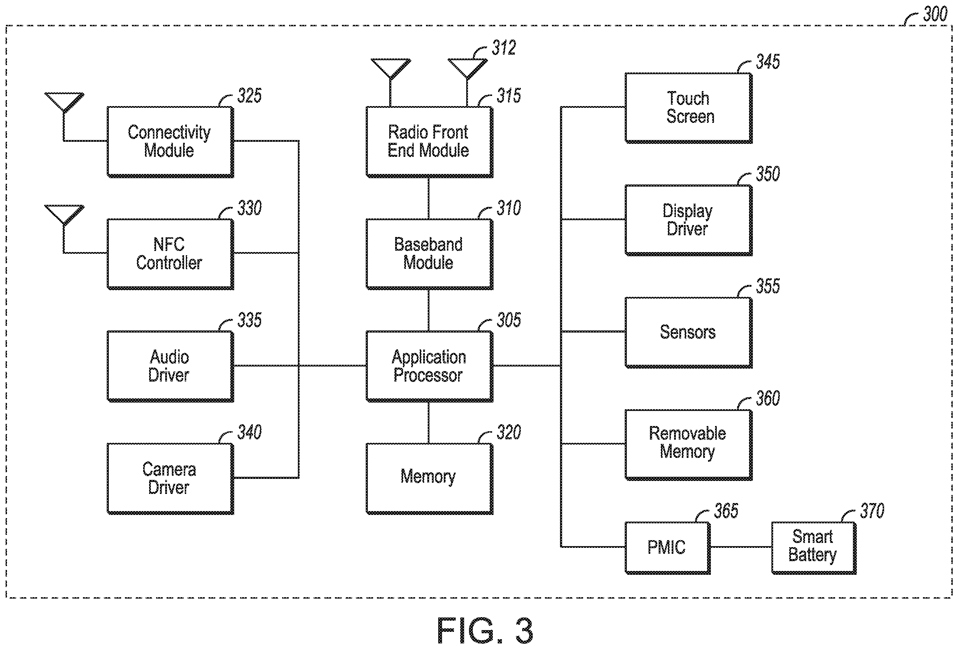

FIG. 3 illustrates a user device in accordance with some aspects. In some embodiments, the user device 300 may be a mobile device. In some embodiments, the user device 300 may be or may be configured to operate as a User Equipment (UE). In some embodiments, the user device 300 may be arranged to operate in accordance with a new radio (NR) protocol. In some embodiments, the user device 300 may be arranged to operate in accordance with a Third Generation Partnership Protocol (3GPP) protocol. The user device 300 may be suitable for use as a UE 102 as depicted in FIG. 1, in some embodiments. It should be noted that in some embodiments, a UE, an apparatus of a UE, a user device or an apparatus of a user device may include one or more of the components shown in one or more of FIGs. 2, 3, and 5. In some embodiments, such a UE, user device and/or apparatus may include one or more additional components.

In some aspects, the user device 300 may include an application processor 305, baseband processor 310 (also referred to as a baseband module), radio front end module (RFEM) 315, memory 320, connectivity module 325, near field communication (NFC) controller 330, audio driver 335, camera driver 340, touch screen 345, display driver 350, sensors 355, removable memory 360, power management integrated circuit (PMIC) 365 and smart battery 370. In some aspects, the user device 300 may be a User Equipment (UE).

In some aspects, application processor 305 may include, for example, one or more CPU cores and one or more of cache memory, low drop-out voltage regulators (LDOs), interrupt controllers, serial interfaces such as serial peripheral interface (SPI), inter-integrated circuit ($I^2C$) or universal programmable serial interface module, real time clock (RTC), timer-counters including interval and watchdog timers, general purpose input-output (IO), memory card controllers such as secure digital / multi-media card (SD/MMC) or similar, universal serial bus (USB) interfaces, mobile industry processor interface (MIPI) interfaces and Joint Test Access Group (JTAG) test access ports.

In some aspects, baseband module 310 may be implemented, for example, as a solder-down substrate including one or more integrated circuits, a single packaged integrated circuit soldered to a main circuit board, and/or a multi-chip module containing two or more integrated circuits.

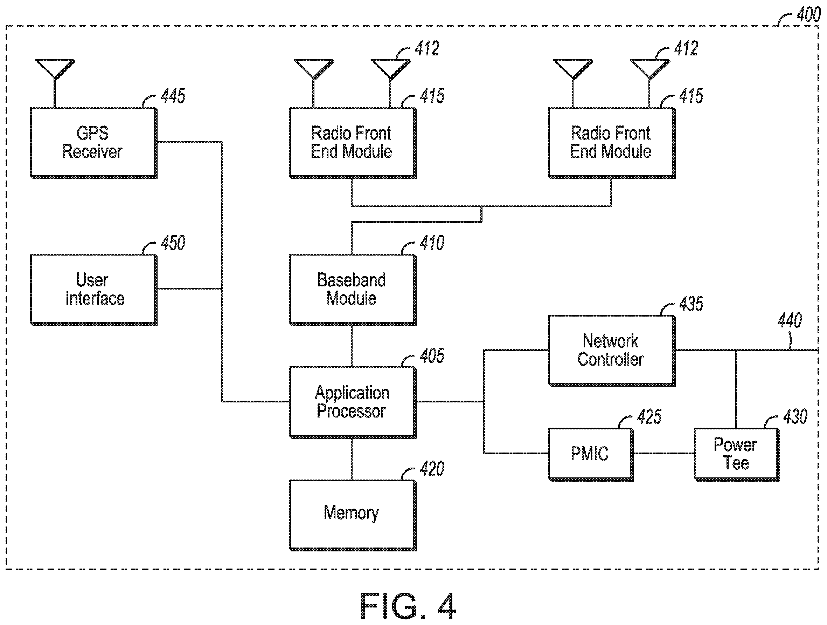

FIG. 4 illustrates a base station in accordance with some aspects. In some embodiments, the base station 400 may be or may be configured to operate as an Evolved Node-B (eNB). In some embodiments, the base station 400 may be or may be configured to operate as a Generation Node-B (gNB). In some embodiments, the base station 400 may be arranged to operate in accordance with a new radio (NR) protocol. In some embodiments, the base station 400 may be arranged to operate in accordance with a Third Generation Partnership Protocol (3GPP) protocol. It should be noted that in some embodiments, the base station 400 may be a stationary non-mobile device. The base station 400 may be suitable for use as an eNB 104 as depicted in FIG. 1, in some embodiments. The base station 400 may be suitable for use as a gNB 105 as depicted in FIG. 1, in some embodiments. It should be noted that in some embodiments, an eNB, an apparatus of an eNB, a gNB, an apparatus of a gNB, a base station and/or an apparatus of a base station may include one or more of the components shown in one or more of FIGs. 2, 4, and 5. In some embodiments, such an eNB, gNB, base station and/or apparatus may include one or more additional components.

FIG. 4 illustrates a base station or infrastructure equipment radio head 400 in accordance with an aspect. The base station 400 may include one or more of application processor 405, baseband modules 410, one or more radio front end modules 415, memory 420, power management circuitry 425, power tee circuitry 430, network controller 435, network interface connector 440, satellite navigation receiver module 445, and user interface 450. In some aspects, the base station 400 may be an Evolved Node-B (eNB), which may be arranged to operate in accordance with a 3GPP protocol, new radio (NR) protocol and/or Fifth Generation (5G) protocol. In some aspects, the base station 400 may be a generation Node-B (gNB), which may be arranged to operate in accordance with a 3GPP protocol, new radio (NR) protocol and/or Fifth Generation (5G) protocol.

In some aspects, application processor 405 may include one or more CPU cores and one or more of cache memory, low drop-out voltage regulators (LDOs), interrupt controllers, serial interfaces such as SPI, $I^2C$ or universal programmable serial interface module, real time clock (RTC), timer-counters including interval and watchdog timers, general purpose IO, memory card controllers such as SD/MMC or similar, USB interfaces, MIPI interfaces and Joint Test Access Group (JTAG) test access ports.

In some aspects, baseband processor 410 may be implemented, for example, as a solder-down substrate including one or more integrated circuits, a single packaged integrated circuit soldered to a main circuit board or a multi-chip module containing two or more integrated circuits.

In some aspects, memory 420 may include one or more of volatile memory including dynamic random access memory (DRAM) and/or synchronous dynamic random access memory (SDRAM), and nonvolatile memory (NVM) including high-speed electrically erasable memory (commonly referred to as Flash memory), phase change random access memory (PRAM), magneto-resistive random access memory (MRAM) and/or a three-dimensional cross-point memory. Memory 420 may be implemented as one or more of solder down packaged integrated circuits, socketed memory modules and plug-in memory cards.

In some aspects, power management integrated circuitry 425 may include one or more of voltage regulators, surge protectors, power alarm detection circuitry and one or more backup power sources such as a battery or capacitor. Power alarm detection circuitry may detect one or more of brown out (under-voltage) and surge (over-voltage) conditions.

In some aspects, power tee circuitry 430 may provide for electrical power drawn from a network cable to provide both power supply and data connectivity to the base station 400 using a single cable. In some aspects, network controller 435 may provide connectivity to a network using a standard network interface protocol such as Ethernet. Network connectivity may be provided using a physical connection which is one of electrical (commonly referred to as copper interconnect), optical or wireless.

In some aspects, satellite navigation receiver module 445 may include circuitry to receive and decode signals transmitted by one or more navigation satellite constellations such as the global positioning system (GPS), Globalnaya Navigatsionnaya Sputnikovaya Sistema (GLONASS), Galileo and/or BeiDou. The receiver 445 may provide data to application processor 405 which may include one or more of position data or time data. Application processor 405 may use time data to synchronize operations with other radio base stations. In some aspects, user interface 450 may include one or more of physical or virtual buttons, such as a reset button, one or more indicators such as light emitting diodes (LEDs) and a display screen.

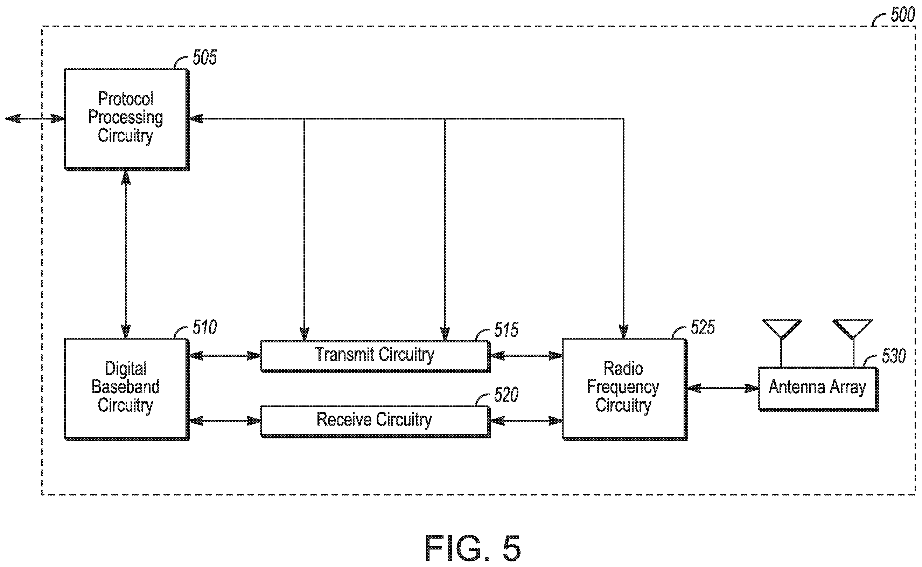

FIG. 5 illustrates an exemplary communication circuitry according to some aspects. Circuitry 500 is alternatively grouped according to functions. Components as shown in 500 are shown here for illustrative purposes and may include other components not shown here in Fig. 5. In some aspects, the communication circuitry 500 may be used for millimeter wave communication, although aspects are not limited to millimeter wave communication. Communication at any suitable frequency may be performed by the communication circuitry 500 in some aspects.

It should be noted that a device, such as a UE 102, eNB 104, gNB 105, the user device 300, the base station 400, the machine 200 and/or other device may include one or more components of the communication circuitry 500, in some aspects.

The communication circuitry 500 may include protocol processing circuitry 505, which may implement one or more of medium access control (MAC), radio link control (RLC), packet data convergence protocol (PDCP), radio resource control (RRC) and non-access stratum (NAS) functions. Protocol processing circuitry 505 may include one or more processing cores (not shown) to execute instructions and one or more memory structures (not shown) to store program and data information.

The communication circuitry 500 may further include digital baseband circuitry 510, which may implement physical layer (PHY) functions including one or more of hybrid automatic repeat request (HARQ) functions, scrambling and/or descrambling, coding and/or decoding, layer mapping and/or de-mapping, modulation symbol mapping, received symbol and/or bit metric determination, multi-antenna port pre-coding and/or decoding which may include one or more of space-time, space-frequency or spatial coding, reference signal generation and/or detection, preamble sequence generation and/or decoding, synchronization sequence generation and/or detection, control channel signal blind decoding, and other related functions.

The communication circuitry 500 may further include transmit circuitry 515, receive circuitry 520 and/or antenna array circuitry 530. The communication circuitry 500 may further include radio frequency (RF) circuitry 525. In an aspect of the disclosure, RF circuitry 525 may include multiple parallel RF chains for one or more of transmit or receive functions, each connected to one or more antennas of the antenna array 530.

In an aspect of the disclosure, protocol processing circuitry 505 may include one or more instances of control circuitry (not shown) to provide control functions for one or more of digital baseband circuitry 510, transmit circuitry 515, receive circuitry 520, and/or radio frequency circuitry 525

In some embodiments, processing circuitry may perform one or more operations described herein and/or other operation(s). In a non-limiting example, the processing circuitry may include one or more components such as the processor 202, application processor 305, baseband module 310, application processor 405, baseband module 410, protocol processing circuitry 505, digital baseband circuitry 510, similar component(s) and/or other component(s).

In some embodiments, a transceiver may transmit one or more elements (including but not limited to those described herein) and/or receive one or more elements (including but not limited to those described herein). In a non-limiting example, the transceiver may include one or more components such as the radio front end module 315, radio front end module 415, transmit circuitry 515, receive circuitry 520, radio frequency circuitry 525, similar component(s) and/or other component(s).

One or more antennas (such as 230, 312, 412, 530 and/or others) may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, one or more of the antennas (such as 230, 312, 412, 530 and/or others) may be effectively separated to take advantage of spatial diversity and the different channel characteristics that may result.

In some embodiments, the UE 102, eNB 104, gNB 105, user device 300, base station 400, machine 200 and/or other device described herein may be a mobile device and/or portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a wearable device such as a medical device (e.g., a heart rate monitor, a blood pressure monitor, etc.), or other device that may receive and/or transmit information wirelessly. In some embodiments, the UE 102, eNB 104, gNB 105, user device 300, base station 400, machine 200 and/or other device described herein may be configured to operate in accordance with 3GPP standards, although the scope of the embodiments is not limited in this respect. In some embodiments, the UE 102, eNB 104, gNB 105, user device 300, base station 400, machine 200 and/or other device described herein may be configured to operate in accordance with new radio (NR) standards, although the scope of the embodiments is not limited in this respect. In some embodiments, the UE 102, eNB 104, gNB 105, user device 300, base station 400, machine 200 and/or other device described herein may be configured to operate according to other protocols or standards, including IEEE 802.11 or other IEEE standards. In some embodiments, the UE 102, eNB 104, gNB 105, user device 300, base station 400, machine 200 and/or other device described herein may include one or more of a keyboard, a display, a non-volatile memory port, multiple antennas, a graphics processor, an application processor, speakers, and other mobile device elements. The display may be an LCD screen including a touch screen.

Although the UE 102, eNB 104, gNB 105, user device 300, base station 400, machine 200 and/or other device described herein may each be illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

It should be noted that in some embodiments, an apparatus used by the UE 102, eNB 104, gNB 105, machine 200, user device 300 and/or base station 400 may include various components shown in FIGs. 2-5. Accordingly, techniques and operations described herein that refer to the UE 102 may be applicable to an apparatus of a UE. In addition, techniques and operations described herein that refer to the eNB 104 may be applicable to an apparatus of an eNB. In addition, techniques and operations described herein that refer to the gNB 105 may be applicable to an apparatus of a gNB.

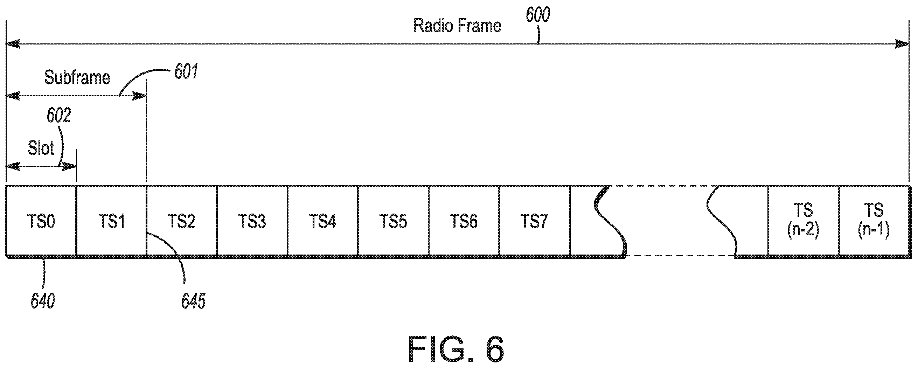

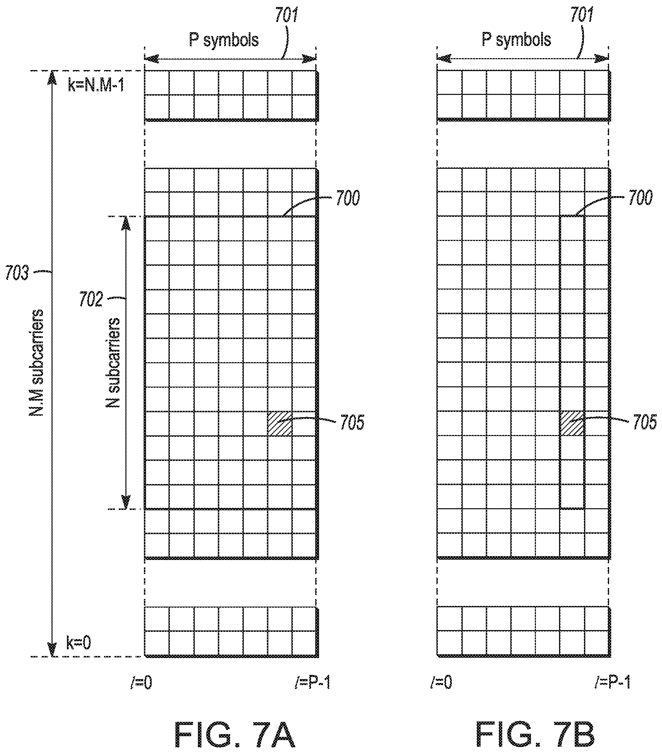

FIG. 6 illustrates an example of a radio frame structure in accordance with some embodiments. FIGs. 7A and 7B illustrate example frequency resources in accordance with some embodiments. In references herein, "FIG. 7" may include FIG. 7A and FIG. 7B. It should be noted that the examples shown in FIGs. 6-7 may illustrate some or all of the concepts and techniques described herein in some cases, but embodiments are not limited by the examples. For instance, embodiments are not limited by the name, number, type, size, ordering, arrangement and/or other aspects of the time resources, symbol periods, frequency resources, PRBs and other elements as shown in FIGs. 6-7. Although some of the elements shown in the examples of FIGs. 6-7 may be included in a 3GPP LTE standard, 5G standard, NR standard and/or other standard, embodiments are not limited to usage of such elements that are included in standards.

An example of a radio frame structure that may be used in some aspects is shown in FIG. 6. In this example, radio frame 600 has a duration of 10ms. Radio frame 600 is divided into slots 602 each of duration 0.5 ms, and numbered from 0 to 19. Additionally, each pair of adjacent slots 602 numbered *2i* and *2i + 1*, where *i* is an integer, is referred to as a subframe 601.

In some aspects using the radio frame format of FIG. 6, each subframe 601 may include a combination of one or more of downlink control information, downlink data information, uplink control information and uplink data information, sidelink control and data information. The combination of information types and direction may be selected independently for each subframe 602.

Referring to FIGs. 7A and 7B, in some aspects, a sub-component of a transmitted signal consisting of one subcarrier in the frequency domain and one symbol interval in the time domain may be termed a resource element. Resource elements may be depicted in a grid form as shown in FIG. 7A and FIG. 7B.

In some aspects, illustrated in FIG. 7A, resource elements may be grouped into rectangular resource blocks 700 consisting of 12 subcarriers in the frequency domain and the P symbols in the time domain, where P may correspond to the number of symbols contained in one slot, and may be 6, 7, or any other suitable number of symbols.

In some alternative aspects, illustrated in FIG. 7B, resource elements may be grouped into resource blocks 700 consisting of 12 subcarriers (as indicated by 702) in the frequency domain and one symbol in the time domain. In the depictions of FIG. 7A and FIG. 7B, each resource element 705 may be indexed as (k, l) where k is the index number of subcarrier, in the range 0 to N.M-1 (as indicated by 703), where N is the number of subcarriers in a resource block, and M is the number of resource blocks spanning a component carrier in the frequency domain.

In accordance with some embodiments, the eNB 104 may encode an enhanced physical downlink control channel (ePDCCH) for transmission to a UE 102 in a sub-frame in first physical resource blocks (PRBs). The ePDCCH may indicate: a transmission of a physical downlink shared channel (PDSCH) in accordance with a wideband coverage enhancement (WCE), and second PRBs to be used for the transmission of the PDSCH. The eNB 104 may encode the PDSCH for transmission to the UE 102. The eNB 104 may configure transceiver circuitry to transmit the PDSCH in a plurality of subframes, wherein transmission of the PDSCH is repeated in each subframe of the plurality of sub-frames in the second PRBs as part of the WCE. The ePDCCH may be transmitted in a starting sub-frame of the plurality in the first PRBs. These embodiments are described in more detail below.

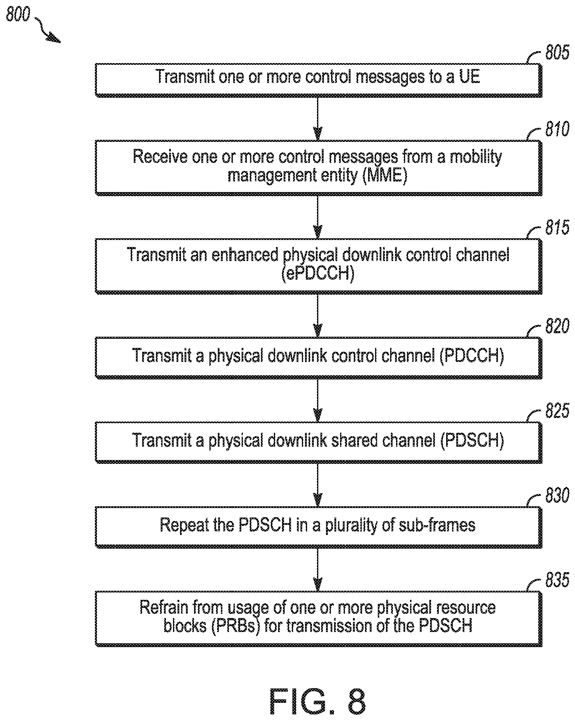

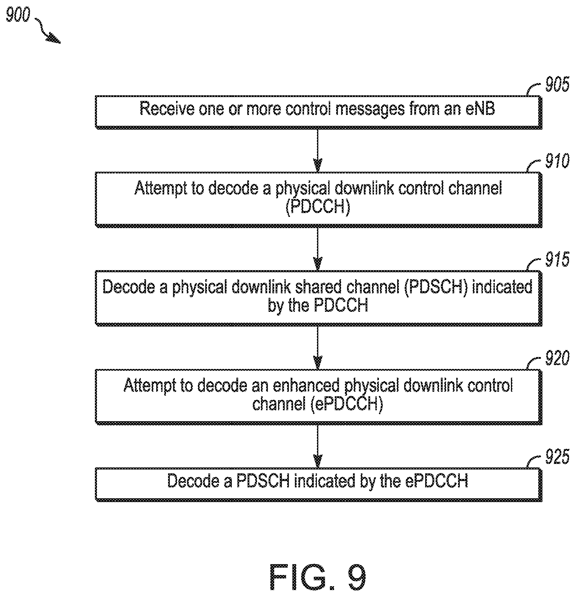

FIG. 8 illustrates the operation of a method of communication in accordance with some embodiments. FIG. 9 illustrates the operation of another method of communication in accordance with some embodiments. In describing the methods 800 and 900, reference may be made to one or more of FIGs. 1-14, although it is understood that the methods 800 and 900 may be practiced with any other suitable systems, interfaces and components. In some cases, descriptions herein of one or more of the concepts, operations and/or techniques regarding one of the methods described herein (800, 900 and/or other) may be applicable to at least one of the other methods described herein (800, 900 and/or other).

Some embodiments of the method 800 may include additional operations in comparison to what is illustrated in FIG. 8, including but not limited to operations described herein. Some embodiments of the method 800 may not necessarily include all of the operations shown in FIG. 8. In addition, embodiments of the method 800 are not necessarily limited to the chronological order that is shown in FIG. 8. In some embodiments, an eNB 104 may perform one or more operations of the method 800, but embodiments are not limited to performance of the method 800 and/or operations of it by the eNB 104. Accordingly, although references may be made to performance of one or more operations of the method 800 by the eNB 104 in descriptions herein, it is understood that the gNB 105 and/or UE 102 may perform one or more operations that may be the same as, similar to and/or reciprocal to one or more of the operations of the method 800, in some embodiments.

Some embodiments of the method 900 may include additional operations in comparison to what is illustrated in FIG. 9, including but not limited to operations described herein. Some embodiments of the method 900 may not necessarily include all of the operations shown in FIG. 9. In addition, embodiments of the method 900 are not necessarily limited to the chronological order that is shown in FIG. 9. In some embodiments, a UE 102 may perform one or more operations of the method 900, but embodiments are not limited to performance of the method 900 and/or operations of it by the UE 102. Accordingly, although references may be made to performance of one or more operations of the method 900 by the UE 102 in descriptions herein, it is understood that the eNB 104 and/or gNB 105 may perform one or more operations that may be the same as, similar to and/or reciprocal to one or more of the operations of the method 900, in some embodiments.

In some cases, operations and techniques described as part of the method 800 may be relevant to the method 900. In some cases, operations and techniques described as part of the method 900 may be relevant to the method 800. In addition, embodiments of the method 900 may include one or more operations that may be the same as, similar to or reciprocal to one or more operations of the method 800 (and/or other operation(s) described herein). For instance, an operation of the method 800 may include transmission of an element (such as a frame, block, message and/or other) by the eNB 104 and the method 900 may include reception of a same or similar element by the UE 102.

While the methods 800 and 900 and other methods described herein may refer to eNBs 104, gNBs 105 or UEs 102 operating in accordance with 3GPP standards, 5G standards, NR standards and/or other standards, embodiments of those methods are not limited to just those eNBs 104, gNBs 105 or UEs 102 and may also be practiced on other devices, such as a Wi-Fi access point (AP) or user station (STA). In addition, the methods 800, 900 and other methods described herein may be practiced by wireless devices configured to operate in other suitable types of wireless communication systems, including systems configured to operate according to various IEEE standards such as IEEE 802.11. The methods 800, 900 and other methods described herein may also be applicable to an apparatus of a UE 102, an apparatus of an eNB 104, an apparatus of a gNB 105 and/or an apparatus of another device described above.

It should also be noted that embodiments are not limited by references herein (such as in descriptions of the methods 800, 900 and/or other descriptions herein) to transmission, reception and/or exchanging of elements such as frames, messages, requests, indicators, signals or other elements. In some embodiments, such an element may be generated, encoded or otherwise processed by processing circuitry (such as by a baseband processor included in the processing circuitry) for transmission. The transmission may be performed by a transceiver or other component, in some cases. In some embodiments, such an element may be decoded, detected or otherwise processed by the processing circuitry (such as by the baseband processor). The element may be received by a transceiver or other component, in some cases. In some embodiments, the processing circuitry and the transceiver may be included in a same apparatus. The scope of embodiments is not limited in this respect, however, as the transceiver may be separate from the apparatus that comprises the processing circuitry, in some embodiments.

One or more of the messages described herein may be included in a standard and/or radio-protocol, including but not limited to Third Generation Partnership Project (3GPP), 3GPP Long Term Evolution (LTE), Fourth Generation (4G), Fifth Generation (5G), New Radio (NR) and/or other. The scope of embodiments is not limited to usage of elements that are included in standards, however.

In some embodiments, the eNB 104 and/or UEs 102 may be arranged to operate in accordance with a license assisted access (LAA) arrangement.

**In** some embodiments, elements (including but not limited to those described herein) may be exchanged in a channel that is included in unlicensed spectrum. The channel may be configured for communication without an anchor carrier. The channel may be configured for communication in accordance with listen-before-talk (LBT) access techniques. In a non-limiting example, one or more operations, methods and/or techniques described herein may be performed in accordance with a MulteFire protocol.

**In** some embodiments, the eNB 104 and/or UEs 102 may be arranged to operate in accordance with an arrangement in which communication is performed in an unlicensed channel. In some embodiments, the eNB 104 and/or UEs 102 may be arranged to operate in accordance with an arrangement in which communication is performed in an unlicensed channel and an anchor channel may not necessarily be used. In some embodiments, the eNB 104 and/or UEs 102 may be arranged to operate in accordance with an arrangement in which communication is performed in an unlicensed channel and an anchor device (such as an eNB 104) may not necessarily be used.

At operation 805, the eNB 104 may transmit one or more control messages. In some embodiments, the eNB 104 may transmit the one or more control messages to one or more UEs 102, although the scope of embodiments is not limited in this respect.

At operation 810, the eNB 104 may receive one or more control messages. In some embodiments, the eNB 104 may receive the one or more control messages from the MME 122, although the scope of embodiments is not limited in this respect.

At operation 815, the eNB 104 may transmit an enhanced physical downlink control channel (ePDCCH). In some embodiments, the eNB 104 may transmit the ePDCCH to one or more UEs 102, although the scope of embodiments is not limited in this respect.

At operation 820, the eNB 104 may transmit a physical downlink control channel (PDCCH). In some embodiments, the eNB 104 may transmit the PDCCH to one or more UEs 102, although the scope of embodiments is not limited in this respect.

At operation 825, the eNB 104 may transmit a physical downlink shared channel (PDSCH). In some embodiments, the eNB 104 may transmit the PDSCH to one or more UEs 102, although the scope of embodiments is not limited in this respect.

At operation 830, the eNB 104 may repeat the PDSCH in a plurality of sub-frames.

At operation 835, the eNB 104 may refrain from usage of one or more PRBs for transmission of the PDSCH.

In some embodiments, the PDCCH and/or ePDCCH may indicate information related to one or more elements that are to be transmitted by the eNB 104. For instance, resources to be used for transmission of the elements may be indicated by the PDCCH and/or ePDCCH. In some embodiments, the resources may include time resources, including but not limited to sub-frames, symbol periods and/or other time unit. In some embodiments, the resources may include frequency resources, including but not limited to resource blocks (RBs), physical resource blocks (PRBs), resource elements (REs), sub-channels, subcarriers and/or other frequency unit.

Embodiments are not limited to allocation of the resources by the eNB 104. In some embodiments, the resources may be pre-allocated, such as pre-allocation as part of a standard and/or protocol. In some embodiments, another component may allocate the resources. In a non-limiting example, one or more PRBs may be allocated for ePDCCH transmissions. In another non-limiting example, one or more OFDM symbols may be allocated for PDCCH transmissions.

In some embodiments, the resources may include contiguous frequency resources. In some embodiments, the resources may include non-contiguous frequency resources. In some embodiments, the resources may include contiguous time resources. In some embodiments, the resources may include non-contiguous time resources.

It should be noted that descriptions herein of some operations and/or techniques may refer to PRBs, OFDM symbols and/or sub-frames, but such references are not limiting. In some embodiments, other time resources and/or frequency resources may be used in one or more of those operations and/or techniques.

In some embodiments, the eNB 104 may transmit an ePDCCH to a UE 102 in a sub-frame in first PRBs. The ePDCCH may indicate one or more of: a transmission of a PDSCH in accordance with WCE; second PRBs to be used for the transmission of the PDSCH; and/or other information. The eNB 104 may transmit the PDSCH to the UE 102. The eNB 104 may configure transceiver circuitry to transmit the PDSCH in a plurality of subframes. Transmission of the PDSCH may be repeated in each subframe of the plurality of sub-frames in the second PRBs as part of the WCE. The ePDCCH may be transmitted in a starting sub-frame of the plurality in the first PRBs.

In some embodiments, the starting sub-frame of the plurality of sub-frames may be aligned with the sub-frame used for transmission of the ePDCCH. In some embodiments, the starting sub-frame of the plurality of sub-frames may be aligned with the sub-frame used for transmission of the PDCCH.

In some embodiments, the eNB 104 may transmit one or more control messages that indicate PRBs allocated for ePDCCH transmissions. In a non-limiting example, the PRBs allocated for ePDCCH transmissions may include the first PRBs and may not necessarily include the second PRBs.

In some embodiments, the eNB 104 may refrain from usage of the first PRBs for the transmission of the PDSCH. For instance, in one or more sub-frames subsequent to the sub-frame in which the ePDCCH is transmitted, the eNB 104 may refrain from usage of the first PRBs for transmission of the PDSCH and/or repetition of the PDSCH.

In some embodiments, the eNB 104 may transmit one or more control messages that indicate a number of repetitions of the PDSCH to be used for the WCE.

In some embodiments, the eNB 104 may transmit a control message that indicates an aggregation level to be used for transmission of the ePDCCH in accordance with the WCE. The eNB 104 may determine, based on the aggregation level, a plurality of enhanced control channel elements (eCCEs) of the sub-frame to be used for the transmission of the ePDCCH. The eNB 104 may transmit the ePDCCH in the plurality of eCCEs.

In a non-limiting example, the number of eCCEs of the plurality of eCCEs may be one of 2, 4, 8, 16, 32, and 64. Embodiments are not limited to these example numbers, as any suitable numbers may be used.

In some embodiments, the eNB 104 may transmit an element in the first PRBs (used for the ePDCCH) in a sub-frame of the plurality after the sub-frame used for the transmission of the ePDCCH. In a non-limiting example, the eNB 104 may transmit (in at least a portion of the time resources and frequency resources described above) a physical downlink control channel (PDCCH) that indicates information for another PDSCH to be transmitted to a legacy UE 102. In another non-limiting example, the eNB 104 may transmit (in at least a portion of the time resources and frequency resources described above) a physical downlink control channel (PDCCH) that indicates information for another PDSCH to be transmitted in accordance with a "normal" mode (such as a mode that does not necessarily employ repetition in accordance with WCE).

In some embodiments, the eNB 104 may transmit, in a first OFDM symbol of the sub-frame used for the transmission of the ePDCCH, a PDCCH that indicates information for a second PDSCH to be transmitted by the eNB 104. In a non-limiting example, the second PDSCH may be transmitted to a legacy UE 102. In another non-limiting example, the second PDSCH may be transmitted to a UE 102 that operates in a "normal" mode (such as a mode that does not necessarily employ repetition in accordance with WCE).

In some embodiments, the eNB 104 may transmit a discovery reference signal (DRS) in one or more of the sub-frames of the plurality of sub-frames. In a non-limiting example, a starting OFDM symbol for a PDSCH in a sub-frame may be based on whether a DRS is transmitted in the sub-frame. In a non-limiting example, in the sub-frames of the plurality in which a DRS is transmitted, one or more PDSCHs may be transmitted in accordance with a starting OFDM symbol that is equal to two. In the sub-frames of the plurality in which a DRS is not transmitted, one or more PDSCHs may be transmitted in accordance with a starting OFDM symbol that is equal to zero.

In some embodiments, the PDCCH and/or ePDCCH may include information related to paging of the UE 102. The PDCCH and/or ePDCCH may be scrambled by a paging radio network temporary identifier (P-RNTI). Some of the descriptions herein and/or figures may refer to a P-RNTI. Some of the descriptions herein and/or figures may refer to a PI-RNTI. These terms may be used interchangeably. In a non-limiting example, a description or figure may refer to a PI-RNTI, but it is understood that the PI-RNTI may be replaced by a P-RNTI in that description or figure, in some embodiments. In another non-limiting example, a description or figure may refer to a P-RNTI, but it is understood that the P-RNTI may be replaced by a PI-RNTI in that description or figure, in some embodiments.

In some embodiments, the eNB 104 may transmit a PDCCH to a first UE 102 in a control channel element (CCE) in a sub-frame in an OFDM symbol allocated for PDCCH transmissions. The PDCCH may indicate a transmission of a first PDSCH. The eNB 104 may transmit the first PDSCH to the first UE 102 in first PRBs in one or more OFDM symbols of the sub-frame subsequent to the OFDM symbol allocated for PDCCH transmissions. The eNB 104 may transmit an ePDCCH to a second UE 102 in second PRBs in one or more OFDM symbols of the sub-frame subsequent to the OFDM symbol allocated for PDCCH transmissions. The ePDCCH may indicate a transmission of a second PDSCH. The eNB 104 may transmit the second PDSCH to the second UE 102 in third PRBs in one or more OFDM symbols of the sub-frame subsequent to the OFDM symbol allocated for PDCCH transmissions.

In some embodiments, as part of the WCE, the eNB 104 may repeat transmission of the second PDSCH (indicated by the ePDCCH) in a plurality of sub-frames. The PDCCH, the ePDCCH, the first PDSCH, and the second PDSCH may be transmitted in a starting sub-frame of the plurality of sub-frames. In some embodiments, the starting sub-frame of the plurality of sub-frames may be aligned with the sub-frame used for transmission of the PDCCH, ePDCCH, and the first PDSCH.

In some embodiments, the eNB 104 may receive, from the MME 122, a message that indicates one or more of: that the second UE is to be paged (for the second PDSCH, indicated by the ePDCCH); a level of WCE for the second UE 102; and/or other information.

In some embodiments, an apparatus of an eNB 104 may comprise memory. The memory may be configurable to store information identifying one or more PRBs. The memory may store one or more other elements and the apparatus may use them for performance of one or more operations. The apparatus may include processing circuitry, which may perform one or more operations (including but not limited to operation(s) of the method 800 and/or other methods described herein). The processing circuitry may include a baseband processor. The baseband circuitry and/or the processing circuitry may perform one or more operations described herein, including but not limited to encoding of a PDCCH and/or ePDCCH. The apparatus may include transceiver circuitry to transmit the PDCCH and/or ePDCCH. The transceiver circuitry may transmit and/or receive other blocks, messages and/or other elements.

At operation 905, the UE 102 may receive one or more control messages. In some embodiments, the UE 102 may receive the one or more control message from the eNB 104, although the scope of embodiments is not limited in this respect.

At operation 910, the UE 102 may attempt to decode a PDCCH. In some embodiments, the UE 102 may attempt to decode the PDCCH from the eNB 104, although the scope of embodiments is not limited in this respect.

At operation 915, the UE 102 may decode a PDSCH indicated by the PDCCH. In some embodiments, the UE 102 may receive the PDSCH from the eNB 104, although the scope of embodiments is not limited in this respect.

At operation 920, the UE 102 may attempt to decode an ePDCCH. In some embodiments, the UE 102 may attempt to decode the ePDCCH from the eNB 104, although the scope of embodiments is not limited in this respect.

At operation 925, the UE 102 may decode a PDSCH indicated by the ePDCCH. In some embodiments, the UE 102 may receive the PDSCH from the eNB 104, although the scope of embodiments is not limited in this respect.

It should be noted that one or more of the operations 910-925 may not necessarily be performed in some cases. For instance, whether one of the operations is performed may depend at least partly on an outcome of one of the other operations.

In a non-limiting example, the UE 102 may attempt to decode a PDCCH. If the PDCCH is successfully decoded, the UE 102 may decode (and/or attempt to decode) a first PDSCH in first PRBs indicated by the PDCCH. The first PDSCH may be transmitted in accordance with a normal mode (such as a mode in which repetition in accordance with WCE is not used), although the scope of embodiments is not limited in this respect. If the PDCCH is not successfully decoded, the UE 102 may attempt to decode an ePDCCH. If the ePDCCH is successfully decoded, the UE 102 may decode (and/or attempt to decode) a second PDSCH in second PRBs indicated by the ePDCCH. The second PDSCH may be transmitted in accordance with a number of repetitions for WCE, although the scope of embodiments is not limited in this respect.

In some embodiments, the UE 102 may receive control signaling that indicates a number of repetitions for the WCE. In some embodiments, the UE 102 may receive the control signaling from the eNB 104, although the scope of embodiments is not limited in this respect.

In some embodiments, the UE 102 may receive, from the eNB 104, a control message that indicates an aggregation level for the ePDCCH in accordance with the WCE. The UE 102 may determine, based on the aggregation level, a plurality of enhanced control channel elements (eCCEs) of the sub-frame to be used to decode the ePDCCH.

In some embodiments, the UE 102 may decode (and/or attempt to decode) one or more of the following in a channel that is included in unlicensed spectrum: the PDCCH, one or more PDSCHs, the ePDCCH and/or other element(s).

In some embodiments, an apparatus of a UE 102 may comprise memory. The memory may be configurable to store information identifying one or more PRBs. The memory may store one or more other elements and the apparatus may use them for performance of one or more operations. The apparatus may include processing circuitry, which may perform one or more operations (including but not limited to operation(s) of the method 800 and/or other methods described herein). The processing circuitry may include a baseband processor. The baseband circuitry and/or the processing circuitry may perform one or more operations described herein, including but not limited to decoding of the PDCCH and/or ePDCCH. The apparatus may include transceiver circuitry to receive the PDCCH and/or ePDCCH. The transceiver circuitry may transmit and/or receive other blocks, messages and/or other elements.

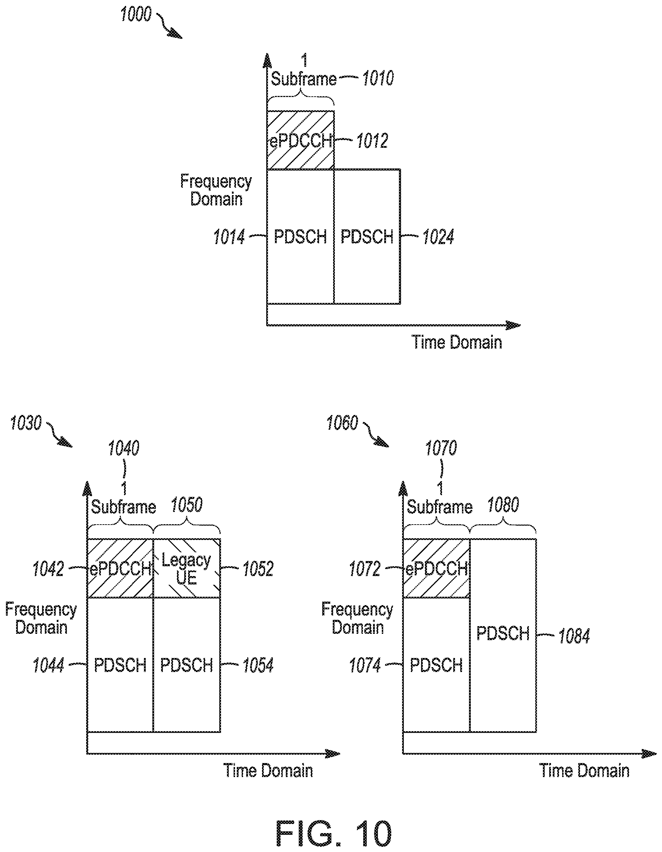

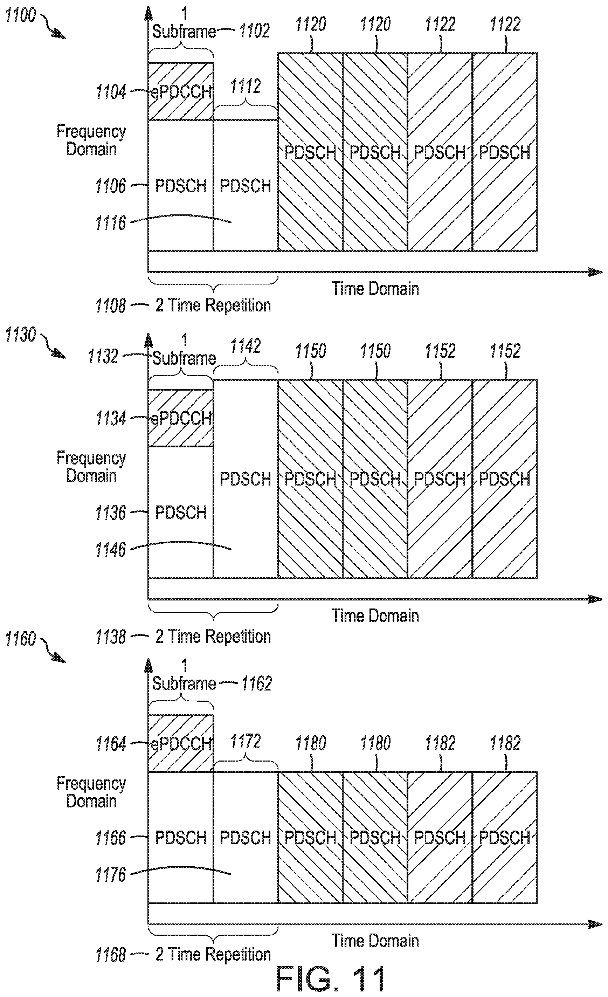

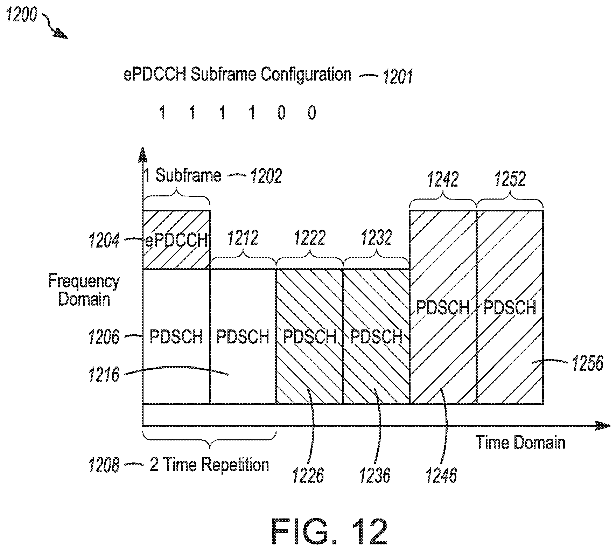

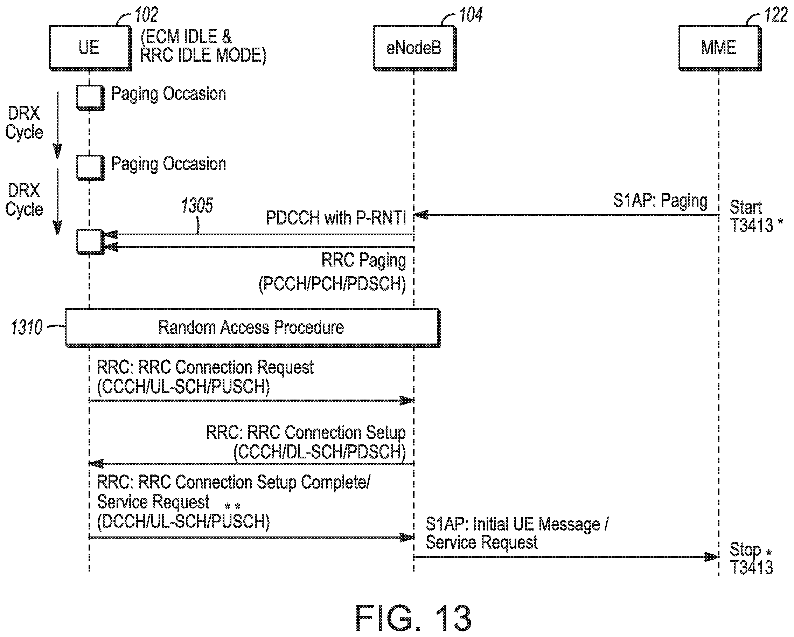

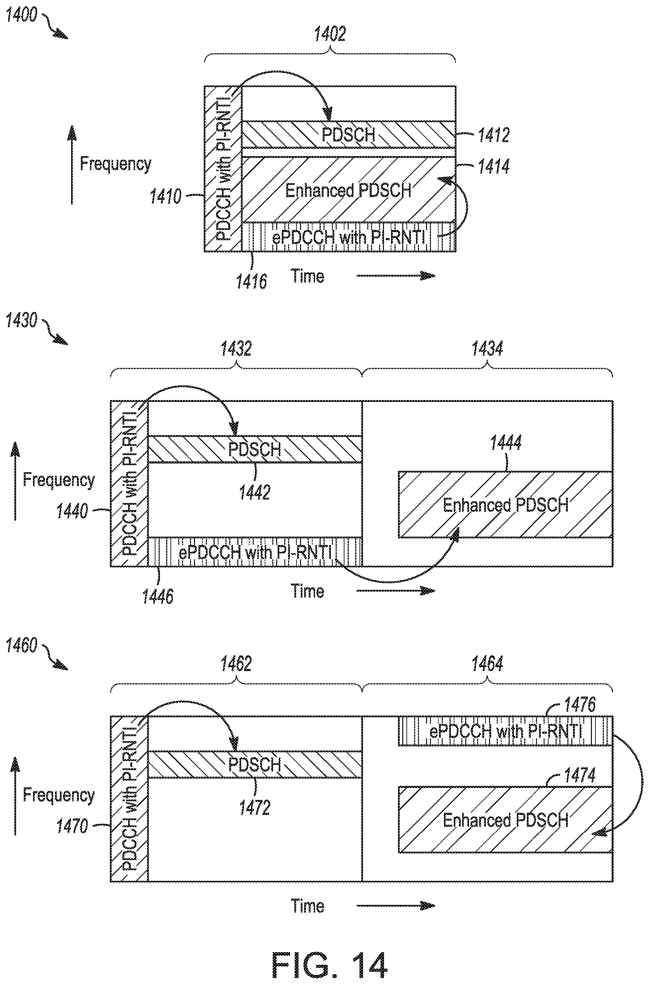

FIG. 10 illustrates examples of transmission of enhanced physical downlink control channels (ePDCCHs) and physical downlink shared channels (PDSCHs) in accordance with some embodiments. FIG. 11 illustrates additional examples of transmission of ePDCCHs and PDSCHs in accordance with some embodiments. FIG. 12 illustrates additional examples of transmission of ePDCCHs and PDSCHs in accordance with some embodiments. FIG. 13 illustrates an example paging procedure in accordance with some embodiments. FIG. 14 illustrates examples of transmission of ePDCCHs, enhanced PDSCHs (ePDSCHs), PDCCHs and PDSCHs in accordance with some embodiments.

It should be noted that the examples shown in FIGs. 10-14 may illustrate some or all of the concepts and techniques described herein in some cases, but embodiments are not limited by the examples. For instance, embodiments are not limited by the name, number, type, size, ordering, arrangement and/or other aspects of the operations, messages, elements, signaling, eNBs 104, UEs 102, sub-frames, time resources, RBs, frequency resources and other elements as shown in FIGs. 10-14. Although some of the elements shown in the examples of FIGs. 10-14 may be included in a 3GPP LTE standard, 5G standard, NR standard and/or other standard, embodiments are not limited to usage of such elements that are included in standards.

In some embodiments, devices may operate in unlicensed spectrum in accordance with an LTE protocol and/or a Licensed-Assisted Access (LAA) technique. Embodiments are not limited to usage of LTE protocols, as other protocol may be used, in some embodiments. Embodiments are also not limited to usage of LAA techniques, as other techniques for usage of unlicensed spectrum may be used, in some embodiments. Example scenarios of LTE operation in unlicensed spectrum include, but are not limited to: LTE operation in the unlicensed spectrum via dual connectivity (DC); operation of a standalone LTE system in the unlicensed spectrum; operation of a standalone LTE system in the unlicensed spectrum without usage of an "anchor" in licensed spectrum; MulteFire: and/or other.

In some embodiments, devices may operate in licensed spectrum in accordance with one or more techniques such as eMTC, NB-IoT and/or other. In some embodiments, devices may operate in unlicensed spectrum in accordance with LTE, Carrier Aggregation based LAA/eLLAA, LTE operation in the unlicensed spectrum via dual connectivity (DC), standalone LTE operation, MulteFire and/or other technique(s). In some embodiments, MulteFire operation may include LTE-based operation in the unlicensed spectrum without usage of an "anchor" in licensed spectrum.

Various IoT techniques/protocols/services may be used, in some embodiments. Non-limiting examples include, but are not limited to, enhanced Machine Type Communication (eMTC) and NarrowBand IoT (NB-IoT).

In some embodiments, coverage enhancement (CE) techniques may be used. For instance, devices deployed deep inside buildings and/or devices at the edge of coverage may benefit from coverage enhancement, in some cases. It should be noted that the coverage enhancement may be with respect to a cell coverage footprint, although the scope of embodiments is not limited in this respect. In some cases, coverage enhancement may be based on an adjustment, boost, improvement and/or addition to a link budget of the cell coverage footprint that may enable communication by a device (such as a device outside of the footprint, a device deployed deep inside a building and/or other). For instance, without the coverage enhancement, such a device may not necessarily be able to successfully communicate with a base station of the cell coverage footprint.

In some cases, eMTC and NB-IoT techniques may be designed to ensure that the UEs 102 have relatively low cost, relatively low power consumption and/or enhanced coverage. To extend the benefits of LTE IoT designs into unlicensed spectrum, MulteFire techniques may be designed for Unlicensed-IoT (U-IoT) based on eMTC and/or NB-IoT. Non-limiting examples of unlicensed frequency bands in which NB-IoT and/or eMTC based U-IoT may be used include the sub-1 GHz band and the ~2.4GHz band.

In some embodiments, eMTC and NB-IoT may be used for relatively narrowband operation. In some embodiments, WCE may be used for unlicensed operation (in accordance with MulteFire and/or other technique) for relatively wideband operation. In a non-limiting example, WCE may be used in accordance with MulteFire with an operation bandwidth of 10MHz and 20MHz, and in frequency bands of 3.5GHz and/or 5GHz. Embodiments are not limited to these example bandwidths or to these example frequency bands.

In some embodiments, an aggregation level of ePDCCH may be increased (for instance to 64AL and/or other) to enlarge a coverage area. In some embodiments, an ePDCCH may be transmitted within one subframe. The ePDCCH may occupy a relatively large number of REs, in some cases. In some embodiments, time repetition for PDSCH may be used. Accordingly, the PDSCH may be transmitted within multiple subframes, in some cases. Since the subframe of PDSCH may be different from the subframe of ePDCCH, a subframe relationship between those subframes may be used. In some embodiments, one or more of the following may be used: a subframe configuration; a starting subframe of PDSCH may be aligned with ePDCCH, which may include resource allocation alignment for single and multiple subframes, in some embodiments; a starting subframe of PDSCH may be restricted to a subframe that is later than a subframe of the ePDCCH; and/or other technique(s).

In some embodiments, a subframe pattern of ePDCCH may be configured by the eNB 104 based on one or more of the following: a bitmap with length of legacy ePDCCH, a bitmap of TxOP length, usage of one or more ePDCCHs per subframe (which may be by default, in some cases); and/or other.

In some embodiments, in cases in which a bitmap has the length of TxOP, bitmap may be based on an absolute subframe(s) or relative subframe(s). If the bitmap is based on absolute subframe(s), the UE 102 may detect CRS and determine timing information. If the bitmap is based on relative subframe(s), the UE 102 may detect CRS of a first downlink subframe, and may use this first downlink subframe corresponding to the first bit in the bitmap. In some embodiments, if a subframe is configured as an ePDCCH subframe, but the subframe is used as an uplink subframe (which may be derived in cPDCCH) the UE 102 may ignore this subframe for ePDCCH detection.

In some embodiments, in invalid ePDCCH subframe(s), the UE 102 may perform PDCCH blind detection. In some embodiments, in invalid ePDCCH subframe(s), the UE 102 may refrain from performance of PDCCH blind detection. In some embodiments, in valid ePDCCH subframe(s), the UE 102 may perform PDCCH blind detection. In some embodiments, in valid ePDCCH subframe(s), the UE 102 may refrain from performance of PDCCH blind detection.

In some embodiments, a starting subframe of PDSCH may be the same as a subframe of PDCCH. An example is illustrated in 1000 in FIG. 10, in which two repetitions of PDSCH 1014, 1024 are used. The ePDCCH 1012 and PDSCH 1014 are in the subframe 1010.

In some embodiments, the ePDCCH may assign physical resource blocks (PRBs) which have been assigned to ePDCCH, to PDSCH. As illustrated in 1060 in FIG. 10, the ePDCCH 1072 may occupy a first range of PRBs (such PRB #0 - #15) in the first subframe 1070, then it may assign a second range of PRBs (such as PRBs #0 - #50) for PDSCH 1084 in the second subframe 1080. The second range of PRBs may include some or all of the PRBs of the first range. In a non-limiting example, in the first subframe 1070, the PRBs #0 - #15 have been utilized by the UE 102, which may be prior information to the UE 102, in some cases. The UE 102 may receive the ePDCCH 1072 and may buffer the data of PRBs #16 - #50 of the first subframe 1070 and the data of PRBs #0 - #50 of the second subframe 1084. The UE 102 may combine the buffered data of the two subframes 1070, 1080 to decode the PDSCH (which is included in 1074, 1084 in this example). Any suitable techniques may be used to encode the PDSCHs 1074, 1084. In a non-limiting example, the PDSCHs 1074, 1084 may be based on different data. In another non-limiting example, the PDSCHs 1074, 1084 may be based on repetition.

Embodiments are not limited to the example sizes described above in terms of PRBs, subframes or other elements.

In some embodiments, the ePDCCH may configure the resources for PDSCH in a second subframe to preclude the PRBs used for ePDDCH in a first subframe. In the example 1030 in FIG. 10, the PRBs used for ePDCCH 1042 in the first subframe 1040 are not assigned for PDSCH 1054 in the second subframe 1050. In this example, those PRBs are used for legacy communication, as indicated by 1052. In a non-limiting example, PRBs #16 - #50 may be used for PDSCH (such as 1044 in the first subframe 1040 and 1054 in the second subframe 1050). Any suitable techniques may be used to encode the PDSCHs 1044, 1054. In a non-limiting example, the PDSCHs 1044, 1054 may be based on different data. In another non-limiting example, the PDSCHs 1044, 1054 may be based on repetition. Embodiments are not limited to the example sizes described above in terms of PRBs, subframes or other elements.

In some embodiments, a PRB configuration of ePDCCH may be configured by the eNB 104. High layer signaling may be used, although the scope of embodiments is not limited in this respect. In some embodiments, for PDSCH reception, the UE 102 may preclude usage of configured PRBs no matter whether those PRBs have been used or not. In some embodiments, on the decoded ePDCCH, the UE 102 may derive the PRBs that have been used for the ePDCCH. One or more remaining PRBs, which may have been assigned but not occupied, may be utilized for PDSCH reception, in some embodiments.

In some embodiments, a time relationship between ePDCCH and PDSCH may be used for multiple subframe scheduling. For an additional repeated PDSCH subframe, the resource may be aligned with the first PDSCH subframe. An example is shown in 1100 in FIG. 11. In the first subframe 1102, the ePDCCH 1104 is sent in first PRBs and the PDSCH 1106 may be sent in second PRBs. In the second subframe 1112, the PDSCH 1116 is sent in the second PRBs (same as those used for PDSCH 1106). As indicated by 1108, repetition may be used, although the scope of embodiments is not limited in this respect. Additional PDSCHs 1120-1122 may be sent in subframes later than the first subframe 1102 and later than the second subframe 1112. In the example 1100, the PDSCHs 1120-1122 are sent in the first PRBs and the second PRBs. In addition, repetition of PDSCHs 1120 and/or repetition of the PDSCHs 1122 may be used, although the scope of embodiments is not limited in this respect.

In some embodiments, for the additional repeated PDSCH subframe, the resource may be aligned with the assigned resource in ePDCCH. Another example is shown in 1130 in FIG. 11. In the first subframe 1132, the ePDCCH 1134 is sent in first PRBs and the PDSCH 1136 is sent in second PRBs. In the second subframe 1142, the PDSCH 1146 may be sent in both the first PRBs and in the second PRBs. As indicated by 1138, repetition may be used, although the scope of embodiments is not limited in this respect. Additional PDSCHs 1150-1152 may be sent in subframes later than the first subframe 1132 and later than the second subframe 1142. In the example 1130, the PDSCHs 1150-1152 are sent in the first PRBs and the second PRBs. In addition, repetition of PDSCHs 1150 and/or repetition of the PDSCHs 1152 may be used, although the scope of embodiments is not limited in this respect.

In some embodiments, for configured multiple subframes (which may use time repetition, although the scope of embodiments is not limited in this respect), resources may be aligned with the first PDSCH subframe by appropriate resource configuration. Another example is shown in 1160 in FIG. 11. In the first subframe 1162, the ePDCCH 1164 is sent in first PRBs and the PDSCH 1166 is sent in second PRBs. In the second subframe 1172, the PDSCH 1176 may be sent in the second PRBs. As indicated by 1168, repetition may be used, although the scope of embodiments is not limited in this respect. Additional PDSCHs 1180-1182 may be sent in subframes later than the first subframe 1162 and later than the second subframe 1172. In the example 1160, the PDSCHs 1180-1182 are sent in the first PRBs. In addition, repetition of PDSCHs 1180 and/or repetition of the PDSCHs 1182 may be used, although the scope of embodiments is not limited in this respect.

In some embodiments, subframes may be allocated as ePDCCH subframes. For instance, if a subframe is an ePDCCH subframe, some of the PRBs may be restricted from usage for PDSCH. An example 1200 is shown in FIG. 12. The bitmap 1201 indicates, for subframes 1202, 1212, 1222, 1232, 1242, 1252, which of the subframes are ePDCCH subframes. A "1" indicates that the subframe is an ePDCCH subframe and a "0" indicates that the subframe is not an ePDCCH subframe. Embodiments are not limited to this mapping of the values 0 and 1 to the two different cases (is an ePDCCH subframe, is not an ePDCCH subframe), as other mappings are possible. In the example 1200, the bitmap 1201 indicates that the subframes 1202, 1212, 1222, 1232 are ePDCCH subframes and the subframes 1242, 1252 are not ePDCCH subframes. The ePDCCH 1204 is sent in first PRBs, and the PDSCH 1206 is sent in second PRBs. In accordance with the bitmap 1201, as the subframes 1212, 1222, 1232 are ePDCCH subframes, the PDSCHs 1216, 1226, 1236 are sent in the second PRBs. The first PRBs used for the ePDCCH 1204 are restricted from usage for PDSCHs in the subframes that are allocated as ePDCCH subframes. However, the subframes 1242, 1252 are not ePDCCH subframes. Therefore, the first PRBs may be used for PDSCHs 1246 and 1256. In the example 1200, the first PRBs and the second PRBs are used for PDSCHs 1246 and 1256. In addition, repetition may be used in some or all of the PDSCHs 1206, 1216, 1226, 1236, 1246, 1256, although the scope of embodiments is not limited in this respect.

In some embodiments, for ePDCCH subframes, the eNB 104 may still configure the corresponding PRBs for PDSCHs. This may be an over-write, in some cases.

In some embodiments, in ePDCCH subframes, the UE 102 may perform ePDCCH detection. In other subframes, the UE 102 may use corresponding resources (such as PRBs) for PDSCH detection. The eNB 104 may configure different time/frequency resource for different UEs 102.

In some embodiments, a starting subframe of a PDSCH may be later than the ePDCCH. The corresponding PDSCH may be transmitted later than ePDCCH. In a non-limiting example, the PDSCH may be sent one subframe later than ePDCCH. In another non-limiting example, the PDSCH may be sent two subframes later than ePDCCH. In another non-limiting example, the PDSCH may be sent at least one subframe later than ePDCCH. In another non-limiting example, the PDSCH may be sent after an offset with respect to the ePDCCH. Such an offset may be configured by DCI, high layer signaling and/or other technique(s), in some cases.

In some embodiments, in a paging procedure, a starting subframe may be derived based on a UE identifier. During a DRX period, the UE 102 may attempt to detect the PDCCH with PI-RNTI (as indicated by 1305). If the UE 102 detects the paging transmission and finds an identity of the UE 102, the UE 102 may trigger a random access procedure (as indicated by 1310) to establish an RRC connection. The paging procedure may include one or more operations and/or messages shown in FIG. 13. In some embodiments, the paging procedure may not necessarily include all elements (such as operations and/or messages) shown in FIG. 13. In some embodiments, the paging procedure may include one or more elements not shown in FIG. 13. Embodiments are not limited to the chronological ordering of the elements shown in FIG. 13. Embodiments are not limited to the types, names or other aspects of the elements shown in FIG. 13. One or more of the elements shown in FIG. 13 may be included in a 3GPP standard and/or other standard, although embodiments are not limited to usage of elements that are included in a standard.

In some embodiments, coverage enhancement may be used, and the paging procedure may support two modes. One mode may be based on a legacy UE 102 that operates in a normal coverage area and detects the PDCCH with PI-RNTI. Another mode may be based on a UE 102 (including but not limited to a WCE UE 102 and/or a UE 102 that supports coverage enhancement) that operates in an extended area (in comparison to the normal coverage area referred to above) and detects the ePDCCH with PI-RNTI.

It should be noted that the terms "normal coverage area" and "extended coverage area" may be used herein for clarity, but usage of those terms is not limiting. In some embodiments, the normal coverage area may be a first coverage area, and the extended coverage area may be a second coverage area. In some cases, the second coverage area may be at least as large as the first coverage area and may include the first coverage area. In some cases, the second coverage area may be at least as large as the first coverage area and may include at least some of the first coverage area.

In some embodiments, when a UE 102 operates in a "normal coverage mode," the UE 102 may be able to communicate with an eNB 104 when the UE 102 is in the normal coverage area but may not necessarily be able to communicate with the eNB 104 when the UE 102 is outside of the normal coverage area. In addition, when the UE 102 operates in an "extended coverage mode," the UE 102 may be able to communicate with the eNB 104 when the UE 102 is in the extended coverage area but may not necessarily be able to communicate with the eNB 104 when the UE 102 is outside of the extended coverage area.

In some embodiments, the normal coverage mode and the extended coverage mode may be based at least partly on how one or more operations are performed. For instance, a different number of diversity repetitions may be used for the normal coverage mode and the extended coverage mode.

In some embodiments, during an RRC connection release, a serving eNB 104 may transmit, to the MME 122, a parameter and/or container that indicates information related to whether a UE 102 operates in a normal coverage area or in an extended coverage area. In a non-limiting example, a "UE Paging Coverage Information WCE" parameter and/or container (or a similar parameter and/or container) may be used. For instance, one bit may be used for the UE Paging Coverage Information WCE parameter/container. A value of "0" may indicate a normal coverage area and/or that the UE 102 operates in a normal coverage mode. A value of "1" for the UE Paging Coverage Information WCE parameter/container may indicate an extended coverage area and/or that the UE 102 operates in an extended coverage mode. The relationship between the values "0" and "1" and the different coverage areas/modes given above is an example mapping, but embodiments are not limited to this particular relationship. In some embodiments, if multiple coverage enhancement levels are used, the UE Paging Coverage Information WCE parameter/container may include more than one bit.

In some embodiments, a message may be sent from the MME 122 to one or more eNBs 104 (including but not limited to one or more eNBs 104 in a tracking area). The message may include the UE Paging Coverage Information WCE parameter/container and/or related information. In some embodiments, a UE_ID may be enlarged by $2^N$ times. Here, N may be related to a number of coverage enhancement levels. For instance, N may be equal to one if one WCE level is introduced. A mode may be determined based on mod(UE_ID,2). A paging frame/occasion may be determined as ceil(UE_ID/2) and/or similar.

In some embodiments, the MME 122 may configure different coverage levels at different attempts. In a non-limiting example, if a UE 102 is recorded as operating in a normal coverage mode when the UE 102 releases an RRC connection, the MME 122 may attempt to page the UE in accordance with the normal coverage mode in a first attempt. If the paging fails in the first attempt, the MME 122 may attempt to page the UE 102 in accordance with the extended coverage mode in a second attempt.

In some embodiments, the UE 102 may attempt to detect the paging in accordance with either or both of the normal coverage mode and the extended coverage mode. In some embodiments, the UE 102 may attempt to detect the paging in accordance with either or both of the normal coverage mode and the extended coverage mode, regardless of which mode (normal coverage mode or extended coverage mode) the UE 102 operates when the UE 102 releases the RRC connection. In a non-limiting example, the UE 102 may buffer a subframe, and may attempt to decode paging in the PDCCH with PI-RNTI. If the paging is not decoded, the UE 102 may attempt to decode paging in the ePDCCH with PI-RNTI.

In some embodiments, one or more parameters related to the ePDCCH may be reported from the serving eNB 104 to the MME 122, including but not limited to one or more of the example parameters described below. In a non-limiting example, a start symbol parameter may be reported. This parameter may be configured and/or set to a default value (such as 2 or other). In another non-limiting example, an aggregation level may be reported. In another non-limiting example, parameter(s) related to resource block assignment may be reported. For instance, one or more of the following may be reported: a resource block assignment, a number of PRBs, one or more RB indexes and/or other. In another non-limiting example, a parameter that indicates whether a distributed mapping or localized mapping is used may be reported. In another non-limiting example, a parameter related to scrambling of DM-RSs (such as *dmrs-ScramblingSequenceInt* and/or other) may be reported.

In some embodiments, in addition to the coverage enhancement of the UE 102, parameters related to the ePDCCH may be transmitted by the MME 122 to one or more eNBs 104 (including but not limited to one or more eNBs 104 in a tracking area).

In some embodiments, one or more parameters related to the ePDCCH may be pre-defined among multiple eNBs 104 instead of being configured by the MME 122. Examples of such parameters include, but are not limited to, the start symbol and the parameter that indicates whether a distribution or localized mapping is used.

In some embodiments, multiple control channels may use the PI-RNTI. In a non-limiting example, in a subframe, a PDCCH with PI-RNTI and a corresponding PDSCH may be transmitted. In the same subframe, an ePDCCH with PI-RNTI and a corresponding coverage enhanced PDSCH may be transmitted.

In another non-limiting example, in a subframe, a PDCCH with PI-RNTI and a corresponding PDSCH may be transmitted. An ePDCCH with PI-RNTI may be transmitted in the same subframe, and a corresponding coverage enhanced PDSCH may be transmitted in a different subframe.

In some embodiments, one paging element may be transmitted per subframe. In a non-limiting example, one or more elements related to paging in accordance with the coverage enhanced mode may be transmitted in a subframe. In another subframe may be next to a subframe in which one or more elements related to paging in accordance with a legacy mode (and/or normal mode) are transmitted. The two subframes may be adjacent, in some embodiments, although the scope of embodiments is not limited in this respect.

In the example 1400 in FIG. 14, in the subframe 1402, the PDCCH 1410 and corresponding PDSCH 1412 are transmitted. The PDCCH 1410 may use the PI-RNTI. In the same subframe 1402, the ePDCCH 1416 and corresponding enhanced PDSCH 1414 are transmitted. The ePDCCH 1416 may use the PI-RNTI. Embodiments are not limited to the time resources and frequency resources used for transmission of the elements as shown in the example 1400.

In the example 1430 in FIG. 14, in the subframe 1432, the PDCCH 1440 and corresponding PDSCH 1442 are transmitted. The PDCCH 1440 may use the PI-RNTI. In the same subframe 1432, the ePDCCH 1446 is transmitted. A corresponding enhanced PDSCH 1444 (for ePDCCH 1446) is transmitted in a different subframe (1434). The ePDCCH 1446 may use the PI-RNTI. Embodiments are not limited to the time resources and frequency resources used for transmission of the elements as shown in the example 1430.

In the example 1460 in FIG. 14, in the subframe 1462, the PDCCH 1470 and corresponding PDSCH 1472 are transmitted. The PDCCH 1470 may use the PI-RNTI. In a different subframe 1464, the ePDCCH 1476 and corresponding enhanced PDSCH 1474 are transmitted. The ePDCCH 1476 may use the PI-RNTI. Embodiments are not limited to the time resources and frequency resources used for transmission of the elements as shown in the example 1460.

In some embodiments, one or more EPDCCH formats may be supported in an MF cell with wideband coverage enhancement. A non-limiting example is shown in the table below. For the formats identified as 0-5, a number of ECCEs for one EPDCCH is shown for localized transmission and for distributed transmission in two different cases. The cases are referred to as case A and case B, and may be included in a 3GPP standard and/or other standard, although the scope of embodiments is not limited in this respect. In a non-limiting example, Case A may be used when the conditions corresponding to case 1 in clause 9.1.4 of 3GPP TS 36.213 are satisfied. Otherwise case B may be used.

| EPDCCH format | Number of ECCEs for one EPDCCH, $N_{ECCE}^{EPDCCH}$ | | | |
| | Case A | | Case B | |
| | Localized transmission | Distributed transmission | Localized transmission | Distributed transmission |
|---|---|---|---|---|
| 0 | 2 | 2 | 1 | 1 |
| 1 | 4 | 4 | 2 | 2 |
| 2 | 8 | 8 | 4 | 4 |
| 3 | 16 | 16 | 8 | 8 |
| 4 | 32 | 32 | 16 | 16 |
| 5 | 64 | 64 | 32 | 32 |

In some embodiments, for WCE UEs in wideband enhanced coverage, the starting OFDM symbol for PDSCH may be determined as follows. In subframes carrying WCE discovery reference signals (DRSs): the starting OFDM symbol may be equal to two ($l_{DataStart}$ = 2) for the first subframe carrying WCE DRS on which PDSCH is received; and the starting OFDM symbol may be equal to zero ($l_{DataStart}$ = 0) for the second subframe carrying WCE DRS on which PDSCH is received. In some embodiments, in subframes not carrying WCE DRSs, other techniques may be used. In a non-limiting example, a higher layer parameter (including but not limited to *StartSymbolWCE-mf* or a similar parameter may be received in a message (including but not limited to a message from the eNB 104). The starting OFDM symbol may be based at least partly on the parameter.

In some embodiments, for MF, if a UE 102 is configured by higher layers to decode EPDCCH with CRC scrambled by the P-RNTI, the UE 102 may (and/or shall) decode the EPDCCH and the corresponding PDSCH according to one or more of the following. The scrambling initialization of PDSCH corresponding to these EPDCCHs may be based on P-RNTI. For DCI format 1A and a Type1-common search space, if the number of PBCH antenna ports is one, single-antenna port, port 0 is used. Otherwise, transmit diversity may be used.

In some embodiments, an information element (IE), including but not limited to a *RadioResourceConfigDedicated-MF* may be used to modify the MF specific part of a dedicated physical configuration. One or more of the following parameters may be included in the IE. A WCE-Mode-mf parameter may indicate that the WCE mode is used. A RadioResourceConfigDedicatedScell parameter (and/or similar parameter) may indicate a physical configured dedicated Scell. One or more additional parameters may be included in some embodiments.

In some embodiments, a message (including but not limited to a "UEPagingCoverageInformation" message) may include one or more fields. In some embodiments, the message may be transmitted from the MME 122 to the eNB 104, although the scope of embodiments is not limited in this respect. The message may include one or more of the fields shown in the table below. The message may include one or more additional fields, in some embodiments.

| ***UEPagingCoverageinformation* field descriptions** |
|---|
| **mpdcch-NumRepetition** <br> Number of repetitions for MPDCCH. The value is an estimate of the required number of repetitions for MPDCCH for paging. |
| **epdcch-AggregationLevel** <br> Aggregation level of EPDCCH. The value is an estimate of the required aggregation level for EPDCCH for paging. Value al1 corresponds to 1, value al2 corresponds to 2, value al3 corresponds to 4, and so on. |

In some embodiments, a WCE UE 102 in wideband enhanced coverage may (and/or shall), upon detection of a EPDCCH intended for the UE 102, decode the corresponding PDSCH in subframe(s) $n + k_i$ with i = 0, 1, ... , N-1 according to the EPDCCH, wherein sub-frame $n$ is the subframe in which the EPDCCH is transmitted. If the PDSCH is carrying SIB-MF1, subframe(s) $n+k_i$ with $i=0, 1, ... , N-1$ are 2 consecutive DL subframe(s) wherein $k_0=0$ and $k_1=1$. Otherwise, subframe(s) $n+k_i$ with $i=0,1, ... ,N-1$ are N consecutive DL subframe(s) wherein $k_0=0, k_1 < k_2 < ... , k_{N-1}$. The value of N may be determined by the repetition number field in the corresponding DCI according to the table below.

| 'Repetition Number' field | N |
|---|---|
| 00 | 1 |
| 01 | 2 |
| 10 | 4 |
| 11 | 8 |

The following claims are hereby incorporated into the detailed description, with each claim standing on its own as a separate embodiment.

## Claims

1. A method, comprising:
   by a base station, BS:

   encoding an enhanced physical downlink control channel ,ePDCCH, for transmission to a User Equipment ,UE, in a sub-frame in first physical resource blocks ,PRBs, wherein the ePDCCH indicates:

   a transmission of a physical downlink shared channel ,PDSCH, in accordance with a wideband coverage enhancement ,WCE, and
   second PRBs to be used for the transmission of the PDSCH;

   encoding the ePDCCH to include information related to paging of the UE,
   wherein the ePDCCH and its cyclic redundancy check, CRC, are scrambled by a paging radio network temporary identifier ,P-RNTI,
   encoding, for transmission to the UE, a control message that indicates a number of repetitions of the PDSCH to be used for the WCE;
   encoding the PDSCH for transmission to the UE;
   configuring transceiver circuitry to transmit the PDSCH in a plurality of subframes,
   wherein transmission of the PDSCH is repeated , according to the number of repetitions indicated by the control message, in each subframe of the plurality of sub-frames in the second PRBs as part of the WCE,
   wherein the ePDCCH is transmitted in a starting sub-frame of the plurality in the first PRBs; and
   encoding, for transmission in a first orthogonal frequency division multiplexing, OFDM, symbol of the sub-frame used for the transmission of the ePDCCH, a physical downlink control channel, PDCCH, that indicates that the UE is to be paged,
   wherein the PDCCH is scrambled by the P-RNTI,
   wherein the memory is configured to store information identifying the first PRBs and the second PRBs.

2. The method according to claim 1, wherein the ePDCCH and the PDSCH are transmitted in a channel that is included in unlicensed spectrum.

3. The method according to claim 1, further comprising:

   encoding, for transmission, a control message that indicates an aggregation level to be used for transmission of the ePDCCH in accordance with the WCE;
   determining, based on the aggregation level, a plurality of enhanced control channel elements, eCCEs, of the sub-frame to be used for the transmission of the ePDCCH; and
   encoding the ePDCCH for transmission in the plurality of eCCEs.

4. The method according to claim 1, further comprising:

   encoding, for transmission, a control message that indicates PRBs allocated for ePDCCH transmissions,
   wherein the first PRBs are included in the PRBs allocated for ePDCCH transmissions, and
   wherein the second PRBs are not included in the PRBs allocated for ePDCCH transmissions.

**5.** The method according to claim 1, further comprising:
refraining from usage of the first PRBs for the transmission of the PDSCH in the sub-frames of the plurality after the sub-frame used for the transmission of the ePDCCH.

**6.** The method according to claim 1, further comprising:
puncturing the first PRBs from PRBs used for the transmission of the PDSCH in one or more sub-frames of the plurality, the one or more sub-frames after the sub-frame used for the transmission of the ePDCCH.

**7.** The method according to claim 1, wherein:

the PDSCH is a first PDSCH,
and wherein the method further comprises:
encoding, for transmission in a first orthogonal frequency division multiplexing ,OFDM, symbol of the sub-frame used for the transmission of the ePDCCH, a physical downlink control channel ,PDCCH, that indicates information for a second PDSCH to be transmitted to a legacy UE.

**8.** A non-transitory computer-readable storage medium that stores instructions for execution by one or more processors to perform operations for communication by a base station, the operations to configure the one or more processors to perform the method of any of claims 1-7.

**9.** The non-transitory computer-readable storage medium of claim 8, wherein at least one processor of the one or more processors is a baseband processor used to encode the ePDCCH and the PDSCH.

**10.** An apparatus, comprising:
a processor configured to, when executing instructions stored in a memory, perform operations according to the method of any of claims 1-7.

**11.** The apparatus according to claim 10, further comprising:
transceiver circuitry operably coupled to the processor.

**12.** The apparatus according to claim 10, wherein the processor is a baseband processor used to encode the ePDCCH and the PDSCH.

**Patentansprüche**

**1.** Verfahren, umfassend:

durch eine Basisstation, BS:
Codieren eines erweiterten physikalischen Downlink-Steuerkanals, ePDCCH, zur Übertragung an ein Benutzergerät, UE, in einem Unterrahmen in ersten physikalischen Ressourcenblöcken, PRBs, wobei der ePDCCH Folgendes angibt:
eine Übertragung eines gemeinsam genutzten physikalischen Downlink-Kanals, PDSCH,
gemäß einer Breitbandabdeckungserweiterung, WCE, und
zweite PRBs, die für die Übertragung des PDSCH zu verwenden sind;

Codieren des ePDCCH, um Informationen in Bezug auf das Paging des UE einzuschließen,
wobei der ePDCCH und seine zyklische Redundanzprüfung, CRC, durch einen temporären Paging-Funknetzschlüssel,

P-RNTI, verwürfelt sind,

Codieren, zur Übertragung an das UE, einer Steuernachricht, die eine Anzahl von Wiederholungen des PDSCH angibt, die für die WCE zu verwenden sind;
Codieren des PDSCH zur Übertragung an das UE;
Konfigurieren einer Transceiver-Schaltungsanordnung, um den PDSCH in einer Vielzahl von Subframes zu übertragen,
wobei die Übertragung des PDSCH gemäß der Anzahl von Wiederholungen, die durch die Steuernachricht angegeben wird, in jedem Subframe der Vielzahl von Subframes, in den zweiten PRBs als Teil der WCE wiederholt wird,

wobei der ePDCCH in einem Start-Subframe der Vielzahl in den ersten PRBs übertragen wird; und

Codieren, zur Übertragung in einem ersten orthogonalen Frequenzmultiplex-Symbol, OFDM-Symbol, des für die Übertragung des ePDCCH verwendeten Subframes, eines physikalischen Downlink-Steuerkanals, PDCCH, der angibt, dass das UE gerufen werden soll,

wobei der PDCCH durch die P-RNTI verwürfelt ist,

wobei der Speicher konfiguriert ist, um Informationen zu speichern, die die ersten PRBs und die zweiten PRBs identifizieren.

2. Verfahren nach Anspruch 1, wobei der ePDCCH und der PDSCH in einem Kanal übertragen werden, der in einem nicht lizenzierten Spektrum enthalten ist.

3. Verfahren nach Anspruch 1, ferner umfassend:

Codieren, zur Übertragung, einer Steuernachricht, die ein Aggregationsniveau angibt, das zur Übertragung des ePDCCH gemäß der WCE zu verwenden ist;

Bestimmen, basierend auf dem Aggregationsniveau, einer Vielzahl von erweiterten Steuerkanälen, Kanalelementen, eCCEs, des Subframes, die zur Übertragung des ePDCCH zu verwenden sind; und

Codieren des ePDCCH zur Übertragung in der Vielzahl von eCCEs.

4. Verfahren nach Anspruch 1, ferner umfassend:

Codieren, zur Übertragung, einer Steuernachricht, die PRBs angibt, die für ePDCCH-Übertragungen zugewiesen sind,

wobei die ersten PRBs in den PRBs enthalten sind, die für ePDCCH-Übertragungen zugewiesen sind, und

wobei die zweiten PRBs nicht in den PRBs enthalten sind, die für ePDCCH-Übertragungen zugewiesen sind.

5. Verfahren nach Anspruch 1, ferner umfassend:
Unterlassen der Verwendung der ersten PRBs für die Übertragung des PDSCH in den Subframes der Vielzahl nach dem Subframe, der für die Übertragung des ePDCCH verwendet wird.

6. Verfahren nach Anspruch 1, ferner umfassend:
Punktieren der ersten PRBs von PRBs, die für die Übertragung des PDSCH in einem oder mehreren Subframes der Vielzahl verwendet werden, wobei der eine oder die mehreren Subframes nach dem Subframe für die Übertragung des ePDCCH verwendet werden.

7. Verfahren nach Anspruch 1, wobei:

der PDSCH ein erster PDSCH ist,
und wobei das Verfahren ferner umfasst:
Codieren, zur Übertragung in einem ersten orthogonalen Frequenzmultiplex-Symbol, OFDM-Symbol, des für die Übertragung des ePDCCH verwendeten Subframes, eines physikalischen Downlink-Steuerkanals, PDCCH, der Informationen für einen zweiten PDSCH angibt, der an ein älteres UE übertragen werden soll.

8. Nichtflüchtiges computerlesbares Speichermedium, das Anweisungen zur Ausführung durch einen oder mehrere Prozessoren speichert, um Operationen zur Kommunikation durch eine Basisstation durchzuführen, wobei die Operationen den einen oder die mehreren Prozessoren konfigurieren, um das Verfahren nach einem der Ansprüche 1-7 durchzuführen.

9. Nichtflüchtiges computerlesbares Speichermedium nach Anspruch 8, wobei mindestens ein Prozessor des einen oder der mehreren Prozessoren ein Basisbandprozessor ist, der verwendet wird, um den ePDCCH und den PDSCH zu codieren.

10. Vorrichtung, umfassend:
einen Prozessor, der konfiguriert ist, um, wenn er Anweisungen ausführt, die in einem Speicher gespeichert sind, Operationen gemäß dem Verfahren nach einem der Ansprüche 1-7 durchzuführen.

**11.** Vorrichtung nach Anspruch 10, ferner umfassend:
eine Transceiver-Schaltungsanordnung, die betriebsfähig mit dem Prozessor gekoppelt ist.

**12.** Vorrichtung nach Anspruch 10, wobei der Prozessor ein Basisbandprozessor ist, der verwendet wird, um den ePDCCH und den PDSCH zu codieren.

**Revendications**

**1.** Un procédé comprenant :
par une station de base, BS :

le codage d'un canal physique de contrôle de liaison descendante amélioré, ePDCCH, pour la transmission à un équipement utilisateur ,UE, dans une sous-trame dans des premiers blocs de ressources physiques ,PRB, dans lequel l'ePDCCH indique :

une transmission d'un canal physique partagé de liaison descendante, PDSCH, conformément à une amélioration de couverture large bande ,WCE, et
des seconds PRB à utiliser pour la transmission du PDSCH ;

le codage de l'ePDCCH pour inclure des informations liées à un paging de l'UE, dans lequel l'ePDCCH et son contrôle de redondance cyclique, CRC, sont brouillés par un identifiant temporaire de réseau de paging, P-RNTI, le codage, pour la transmission à l'UE, d'un message de contrôle qui indique un nombre de répétitions du PDSCH à utiliser pour la WCE ;
le codage du PDSCH pour la transmission à l'UE ;
la configuration d'une circuiterie d'émetteur-récepteur pour transmettre le PDSCH dans une pluralité de sous-trames,
dans lequel la transmission du PDSCH est répétée, selon le nombre de répétitions indiqué par le message de contrôle, dans chaque sous-trame de la pluralité de sous-trames dans les seconds PRB comme une partie de la WCE,
dans lequel l'ePDCCH est transmis dans une sous-trame de départ de la pluralité dans les premiers PRB ; et
le codage, pour la transmission dans un premier symbole de multiplexage par répartition en fréquences orthogonales, OFDM, de la sous-trame utilisée pour la transmission de l'ePDCCH, d'un canal physique de contrôle de liaison descendante, PDCCH, qui indique que l'UE doit être soumis à un paging,
dans lequel le PDCCH est brouillé par le P-RNTI,
dans lequel la mémoire est configurée pour stocker des informations identifiant les premiers PRB et les seconds PRB.

**2.** Le procédé selon la revendication 1, dans lequel l'ePDCCH et le PDSCH sont transmis dans un canal qui est inclus dans un spectre sans licence.

**3.** Le procédé selon la revendication 1, comprenant en outre :

le codage, pour la transmission, d'un message de contrôle qui indique un niveau d'agrégation à utiliser pour la transmission de l'ePDCCH conformément à la WCE ;
la détermination, sur la base du niveau d'agrégation, d'une pluralité d'éléments de canal de contrôle améliorés, eCCE, de la sous-trame à utiliser pour la transmission de l'ePDCCH ; et
le codage de l'ePDCCH pour la transmission dans la pluralité d'eCCE.

**4.** Le procédé selon la revendication 1, comprenant en outre :

le codage, pour la transmission, d'un message de contrôle qui indique des PRB attribués pour des transmissions ePDCCH, dans lequel les premiers PRB sont inclus dans les PRB attribués pour des transmissions ePDCCH, et dans lequel les seconds PRB ne sont pas inclus dans les PRB attribués pour des transmissions ePDCCH.

**5.** Le procédé selon la revendication 1, comprenant en outre :

la non-utilisation des premiers PRB pour la transmission du PDSCH dans les sous-trames de la pluralité après la sous-trame utilisée pour la transmission de l'ePDCCH.

**6.** Le procédé selon la revendication 1, comprenant en outre :
la perforation des premiers PRB à partir de PRB utilisés pour la transmission du PDSCH dans une ou plusieurs sous-trames de la pluralité, les une ou plusieurs sous-trames étant après la sous-trame utilisée pour la transmission de l'ePDCCH.

**7.** Le procédé selon la revendication 1, dans lequel :

le PDSCH est un premier PDSCH,
et dans lequel le procédé comprend en outre :
le codage, pour la transmission dans un premier symbole de multiplexage par répartition en fréquences orthogonales, OFDM, de la sous-trame utilisée pour la transmission de l'ePDCCH, d'un canal physique de contrôle de liaison descendante, PDCCH, qui indique des informations pour un second PDSCH à transmettre à un UE hérité.

**8.** Un support de stockage non transitoire lisible par calculateur qui stocke des instructions pour l'exécution par un ou plusieurs processeurs pour réaliser des opérations pour la communication par une station de base, les opérations étant destinées à configurer les un ou plusieurs processeurs pour réaliser le procédé selon l'une des revendications 1 à 7.

**9.** Le support de stockage non transitoire lisible par calculateur selon la revendication 8, dans lequel au moins un processeur des un ou plusieurs processeurs est un processeur à bande de base utilisé pour coder l'ePDCCH et le PDSCH.

**10.** Un appareil, comprenant :
un processeur configuré pour, lors de l'exécution d'instructions stockées dans une mémoire, réaliser des opérations selon le procédé selon l'une des revendications 1 à 7.

**11.** L'appareil selon la revendication 10, comprenant en outre :
une circuiterie d'émetteur-récepteur fonctionnellement couplée au processeur.

**12.** L'appareil selon la revendication 10, dans lequel le processeur est un processeur de bande de base utilisé pour coder l'ePDCCH et le PDSCH.

**FIG. 1A**

EP 3 616 452 B1

FIG. 1B

FIG. 2

FIG. 3

FIG. 4

FIG. 5

FIG. 6

FIG. 7A                    FIG. 7B

800

805
Transmit one or more control messages to a UE

810
Receive one or more control messages from a mobility management entity (MME)

815
Transmit an enhanced physical downlink control channel (ePDCCH)

820
Transmit a physical downlink control channel (PDCCH)

825
Transmit a physical downlink shared channel (PDSCH)

830
Repeat the PDSCH in a plurality of sub-frames

835
Refrain from usage of one or more physical resource blocks (PRBs) for transmission of the PDSCH

# FIG. 8

900

905
Receive one or more control messages from an eNB

910
Attempt to decode a physical downlink control channel (PDCCH)

915
Decode a physical downlink shared channel (PDSCH) indicated by the PDCCH

920
Attempt to decode an enhanced physical downlink control channel (ePDCCH)

925
Decode a PDSCH indicated by the ePDCCH

FIG. 9

FIG. 10

FIG. 11

FIG. 12

FIG. 13

FIG. 14

**EP 3 616 452 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62489079
- CN 2017084381 W
- WO 2016122756 A1
- US 2016192333 A1
- US 2014050192 A1, KIM HAKSEONG